# EUROPÄISCHE PATENTSCHRIFT

(11) **EP 3 649 028 B1**
(45) Veröffentlichungstag und Bekanntmachung des Hinweises auf die Patenterteilung: **17.07.2024**
(21) Anmeldenummer: 18725840.5
(22) Anmeldetag: 18.05.2018
(51) Int. Cl.: B60W 50/14

(54) **VERFAHREN ZUM VORAUSSCHAUENDEN BEWERTEN EINER AKTUELLEN FAHRSITUATION SOWIE BEWERTUNGSMODUL**
METHOD FOR PREDICTIVE ASSESSMENT OF A CURRENT DRIVING SITUATION AND ASSESSMENT MODULE
PROCÉDÉ POUR L'ÉVALUATION ANTICIPÉE D'UNE SITUATION DE CONDUITE ACTUELLE AINSI QUE MODULE D'ÉVALUATION

(30) Priorität: 07.07.2017 DE 102017006434
(43) Veröffentlichungstag der Anmeldung: 13.05.2020
(73) Patentinhaber: ZF CV Systems Europe BV, 1170 Brussels (BE)
(72) Erfinder: DIECKMANN, Thomas, 30982 Pattensen (DE); KALLENBACH, Stephan, 30161 Hannover (DE); KÜHNE, Sebastian, 31157 Sarstedt (DE); LÜLFING, Ralph-Carsten, 30826 Garbsen (DE)
(74) Vertreter: Rabe, Dirk-Heinrich
(86) Internationale Anmeldenummer: PCT/EP2018/063160
(87) Internationale Veröffentlichungsnummer: WO 2019/007584

(56) Entgegenhaltungen:
- WO-A1-2016/170786
- CN-A- 106 553 655
- DE-A1- 102012 009 297
- DE-A1- 102015 004 748
- US-A1- 2015 175 161
- US-A1- 2017 101 093

## Beschreibung

Die Erfindung betrifft ein Verfahren zum vorausschauenden Bewerten einer aktuellen Fahrsituation eines Fahrzeuges, insbesondere Nutzfahrzeuges, sowie ein Bewertungsmodul zum Durchführen des Verfahrens.

Unfallsituationen im Fahrbetrieb von Fahrzeugen, insbesondere Nutzfahrzeugen, können vielfältige Ursachen haben. Zum einen kann eine Unfallsituation dadurch eintreten, dass Objekte in einem Fahrzeug-Umfeld unerwarteter Weise in einen Fahrschlauch des eigenen Fahrzeuges gelangen. Andererseits kann aber auch die Charakteristik des Fahrzeug-Umfeldes, beispielsweise ein Reibwert der Fahrbahn, zu einer Unfallsituation beitragen. Um derartige Unfallsituationen zu vermeiden und Unfallfolgen zu minimieren, sind in Fahrzeugen herkömmlicherweise Sensoren angeordnet, mit denen die eigene Fahrdynamik sowie ein Fahrzeug-Umfeld beobachtet und anhand von unterschiedlichen Kriterien, beispielsweise Abständen, Relativgeschwindigkeiten, Beschleunigungen, Schlupfwerten, Trajektorien etc. bewertet werden kann, ob es ausgehend von der aktuellen Fahrsituation zwischen dem eigenen Fahrzeug und einem Objekt zu einer Unfallsituation kommen wird.

Folgt demnach aus einer Bewertung der Signale der Sensoren, dass ausgehend von der aktuellen Fahrsituation eine hohe Unfallwahrscheinlichkeit vorliegt, kann durch Eingriff in die Bremsen im Rahmen einer Notbremsung und/oder in die Lenkung entsprechend reagiert werden, um einen Unfall abzuwenden und die Unfallfolgen zu minimieren. Alternativ oder ergänzend kann der Fahrer vor einer solchen Unfallsituation gewarnt werden.

Derartige Unfallvermeidungs-Systeme basieren darauf, dass sich die aktuellen Fahrsituation bereits als medium-kritische oder kritische Fahrsituation entwickelt hat, d.h. ein Eingreifen des Fahrers oder eines Assistenzsystems unumgänglich ist, um einen Unfall zu verhindern oder die Unfallfolgen zu minimieren. Nachteilig hierbei ist, dass aufgrund der Systembeschränkung, d.h. insbesondere einer beschränkten "Sichtbarkeit" der Sensoren sowie auch der Schnelligkeit der Regelalgorithmen zur Ermittlung der Unfallwahrscheinlichkeit, nicht jede aktuelle Fahrsituation zuverlässig und vor allem rechtzeitig im Hinblick auf einen drohenden Unfall bewertet werden kann, so dass ein Eingreifen unter Umständen zu spät erfolgt. Da sich das Fahrzeug bereits in der jeweiligen Fahrsituation befindet, können Unfallfolgen nicht zuverlässig auf ein minimal mögliches Maß reduziert werden. Weiterhin kann es bei derartigen Systemen zu einer Falscheinschätzung kommen, d.h. es wird eine Unfallsituation vorausgesagt, diese liegt aber tatsächlich nicht vor. Dadurch sinkt die Akzeptanz für derartige Unfallvermeidungs-Systeme.

Eine Bewertung im Hinblick auf zukünftige, noch bevorstehende Fahrsituationen ist nur in begrenztem Maße beispielsweise anhand von prädizierten Trajektorien von umliegenden Objekten möglich, die allerdings nur für einen sehr begrenzten Zeitraum zuverlässig vorhergesagt werden können. Aber auch dann wird eine Warnung oder ein Hinweis erst dann ausgegeben, wenn sich die kritische Fahrsituation bereits entwickelt hat. Bereits vorausschauende bzw. vorbeugende Bewertungen bzw. auch vorbeugende Maßnahmen zur Unfallvermeidung, d.h. bevor sich eine derartige Unfallsituation überhaupt entwickeln kann, sind mit derartigen Systemen nicht möglich, so dass die genannten Systembeschränkungen nicht zuverlässig kompensiert werden können.

Aus der US2015175161A1 ist eine Fahrzeuganordnung bekannt zum Erhalten von Informationen über Objekte außerhalb des Fahrzeugs. Die Anordnung umfasst mehrere Abstandsmesssysteme, die an dem Fahrzeug entlang der Windschutzscheibe, einer Kante oder einer Seite des Fahrzeugs befestigt sind, wobei jedes eine Kamera umfasst.

Aus der US2017101093A1 ist eine Kollisionsvorhersageeinheit bekannt, die verschiedene Arten von Daten sammeln und verarbeiten kann, um die Wahrscheinlichkeiten möglicher Kollisionen basierend auf verschiedenen Bedingungen, die dem Fahrzeug 101 zugeordnet sind, vorherzusagen.

Aus DE102012009297A1 ist es bekannt eine probabilistische Risikobewertung in Raum-Zeit anhand konkurrierender Situationshypothesen zwischen einem Fahrzeug und anderen Verkehrsteilnehmern kognitiv durchzuführen. Dabei wird eine potenzielle Kollisionsgefahr anhand von probabilistisch erkannten Manöverabsichten des Fahrzeugs und den anderen Verkehrsteilnehmern bewertet. Gleichzeitig wird die jeweilige reale Kollisionsgefahr und/oder Folgekollisionsgefahr in entsprechenden Konfliktbereichen ermittelt, wobei für jede Situationshypothese eine Risikobewertung anhand logischer Kontext-Regeln, inklusive Vorrang-Regeln, durchgeführt wird. Parallel zu der Risikobewertung wird ein probabilistisches Verfahren zur Bestimmung der realen und akuten Kollisionsgefahr mit einer Ermittlung des Bewegungsspielraums ausgeführt. Dabei wird eine Vielzahl an fahrbaren Trajektorien des Fahrzeugs und der anderen Verkehrsteilnehmer (V1 bis Vn) anhand deren statistischer Steuerprofile auf einem Zeit-Horizont von 2 Sekunden prognostiziert.

Aus WO2016170786A1 ist ein Informationsverarbeitungssystem zum Schätzen eines Fahrverhaltens bekannt, das einen Detektor aufweist, der einen Fahrzeugumgebungszustand erkennt, bei dem es sich mindestens um die Umgebung eines Fahrzeugs und einen Fahrzustand des Fahrzeugs handelt; eine Verhaltenslerneinheit, die so konfiguriert ist, dass sie ein neuronales Netzwerk dazu veranlasst, eine Beziehung zwischen dem vom Detektor erfassten Fahrzeugumgebungszustand und einem nach dem Fahrzeugumgebungszustand umgesetzten Verhalten des Fahrzeugs zu lernen; und eine Verhaltensschätzeinheit, die so konfiguriert ist, dass sie ein Verhalten des Fahrzeugs schätzt, indem sie den vom Detektor zu einem aktuellen Zeitpunkt erkannten Zustand der Fahrzeugumgebung in das gelernte neuronale Netzwerk eingibt.

Die Aufgabe der Erfindung ist daher, ein Verfahren anzugeben, mit dem ausgehend von einer aktuellen Fahrsituation in einfacher und zuverlässiger Weise eine vorausschauende Bewertung im Hinblick auf eine Unfallsituation erfolgen kann. Aufgabe der Erfindung ist weiterhin, ein Bewertungsmodul zur Durchführung des Verfahrens bereitzustellen.

Diese Aufgabe wird durch ein Verfahren nach Anspruch 1 sowie ein Bewertungsmodul nach Anspruch 17, ein Fahrzeug nach Anspruch 18 und ein Computer-Programmprodukt nach Anspruch 20 gelöst. Bevorzugte Weiterbildungen sind in den Unteransprüchen angegeben.

Erfindungsgemäß ist demnach vorgesehen, eine aktuelle Fahrsituation eines Fahrzeuges in einem Fahrzeug-Umfeld derartig vorausschauend zu bewerten, dass die aktuelle Fahrsituation charakterisierende Fahrsituations-Informationen einem Neuronal-Algorithmus zugeführt werden, der eine Kategorisierung vornimmt, in der der aktuellen Fahrsituation eine Fahrsituations-Kategorie zugeordnet wird, wobei der Fahrsituations-Kategorie eine prognostizierte Fahrsituation für die Zukunft zugrunde gelegt wird, die von dem Neuronal-Algorithmus in Abhängigkeit der aktuellen Fahrsituation ermittelt wird. Der Neuronal-Algorithmus funktioniert erfindungsgemäß nach Art eines künstlichen neuronalen Netzes, das darauf trainiert ist, diese Kategorisierung und somit diese vorausschauende Bewertung vorzunehmen.

Unter einer vorausschauenden Bewertung der aktuellen Fahrsituation wird somit erfindungsgemäß verstanden, wie sich das Fahrgeschehen unter den aktuell vorliegenden Bedingungen für das Fahrzeug voraussichtlich weiterentwickeln wird und in welcher (prognostizierten) Fahrsituation sich das Fahrzeug demnach ausgehend von der aktuellen Fahrsituation in Zukunft voraussichtlich befinden wird. Hierbei unterscheidet sich die aktuelle Fahrsituation vorteilhafterweise noch von der prognostizierten Fahrsituation in der Zukunft, so dass vorteilhafterweise nach der Bewertung und Ausgabe des Bewertungsergebnisses ein genügend großer Eingriffszeitraum für eine Reaktion durch den Fahrer gegeben ist, bevor sich die prognostizierte Fahrsituation tatsächlich beginnt zu entwickeln. Erfindungsgemäß ist hierbei ein Eingriffszeitraum vorgesehen, der größer als die Fahrer-Reaktionszeit ist, mindestens dem Doppelten der Reaktionszeit des Fahrers entspricht. D. h. bis zum Einleiten der prognostizierten Fahrsituation vergehen mindestens 3 bis 4 Sekunden, die für eine adäquate Reaktion durch den Fahrer ausreichend sind, um sich auf die prognostizierte Fahrsituation vorzubereiten.

Durch das erfindungsgemäße Verfahren wird somit die Möglichkeit geschaffen, auf eine bevorstehende, noch nicht eingetretene bzw. eingeleitete Fahrsituation zu reagieren. Insofern unterscheidet sich das erfindungsgemäße Verfahren von herkömmlichen Unfallvermeidungs-Systemen, beispielsweise Notbremsassistenten oder Ausweichassistenten, in denen sich eine vorausschauende Bewertung lediglich auf die aktuell vorliegende Fahrsituation bezieht, beispielsweise über eine Bewertung von aktuell vorliegenden Grenzwerten z.B. für Abstände oder Relativgeschwindigkeiten, aus denen sich eine für die aktuelle Fahrsituation drohende Unfallsituation herleiten lässt. Eine Reaktion durch den Fahrer kann also auch immer erst dann stattfinden, wenn z.B. eine problematische oder kritische Fahrsituation bereits vorliegt bzw. sich aktuell bereits entwickelt, so dass sich ein Eingriffszeitraum von in etwa der Fahrer-Reaktionszeit, d. h. weniger als 3 bis 4 Sekunden, ergibt, die dem Fahrer zum Reagieren bleiben.

Das erfindungsgemäße Verfahren ermöglicht jedoch bereits eine vorbeugende Reaktion des Fahrers beispielsweise aufgrund einer Warnung, die in Abhängigkeit der ermittelten Fahrsituations-Kategorie bereits einen Eingriffszeitraum vor Einleiten der prognostizierten Fahrsituation ausgegeben werden kann, so dass der Fahrer in der aktuellen Fahrsituation in Abhängigkeit der Warnung seinen Aufmerksamkeitsgrad an die zukünftige Entwicklung rechtzeitig anpassen kann. Der Fahrer hat also die Möglichkeit bereits früher, z.B. noch während der aktuellen Fahrsituation, die noch unkritisch ist, in das Fahrgeschehen einzugreifen. Eine kritische Fahrsituation entwickelt sich also unter Umständen überhaupt nicht oder kann zumindest teilweise bereits vorab entschärft werden, da der Fahrer einer Entwicklung in Richtung einer kritischen Fahrsituation vorbeugend entgegenwirkt, so dass eine Aktivierung eines herkömmlichen Unfallvermeidungs-Systems - falls vorhanden - ggf. vollständig unterbleiben kann.

Die die aktuelle Fahrsituation charakterisierenden Fahrsituations-Informationen, die dem Neuronal-Algorithmus vorgegeben werden, sind hierbei insbesondere abhängig von einer Ist-Fahrdynamik des Fahrzeuges ggf. einschließlich eines Anhängers und/oder einer Soll-Fahrdynamik des Fahrzeuges ggf. einschließlich eines Anhängers und/oder einer Fahrzeug-Umfeld-Charakteristik eines Fahrzeug-Umfeldes und/oder einem Fahrerzustand des Fahrers des Fahrzeuges und/oder einem Fahrzeugzustand des Fahrzeuges. Es können jedoch auch weitere Informationen herangezogen werden, auf die der Neuronal-Algorithmus trainiert ist.

Dem Neuronal-Algorithmus werden also vorteilhafterweise Informationen aus unterschiedlichen Blickwinkeln zur aktuellen Fahrsituation vorgegeben, die einen unmittelbaren Einfluss auf die aktuelle und auch die zukünftige Fahrsituation des Fahrzeuges haben können und die in Fahrzeugen mit Fahrassistenzsystemen ohnehin bereits über entsprechende Sensoren und Steuereinrichtungen erfasst und verarbeitet werden. Somit kann die Bewertung auf unterschiedliche Gesichtspunkte gestützt werden. Umso mehr Fahrsituations-Informationen hierbei vorliegen, auf die der Neuronal-Algorithmus trainiert ist und auf die zurückgegriffen werden kann, desto genauer und zuverlässiger kann die erfindungsgemäße vorausschauende Bewertung stattfinden.

Die Ist-Fahrdynamik kann hierbei beispielsweise mit mindestens einem Sensor ausgewählt aus der Gruppe bestehend aus einem Geschwindigkeits-Sensor des Fahrzeuges, einem Längsbeschleunigungs-Sensor des Fahrzeuges, einem Querbeschleunigungs-Sensor des Fahrzeuges, einem Gierraten-Sensor des Fahrzeuges und einem Raddrehzahl-Sensor an mindestens einem Rad des Fahrzeuges ermittelt werden, die in einem Fahrzeug üblicherweise vorhanden sind. Darüber lassen sich also in einfacher Weise umfangreiche Fahrsituations-Informationen, die eine Ist-Fahrdynamik des Fahrzeuges betreffen, ermitteln, wobei die Ist-Fahrdynamik dann insbesondere abhängig von einer Fahrzeug-Geschwindigkeit des Fahrzeuges, einer Fahrzeug-Längsbeschleunigung des Fahrzeuges, einer Fahrzeug-Querbeschleunigung des Fahrzeuges, einer Gierrate des Fahrzeuges und/oder einer Radgeschwindigkeit mindestens eines Rades des Fahrzeuges sein kann, die über diese Sensoren ermittelt werden können.

Die Soll-Fahrdynamik des Fahrzeuges kann vorzugsweise in Abhängigkeit einer Retarder-Sollvorgabe für das Fahrzeug und/oder einer Lenkwinkel-Sollvorgabe für das Fahrzeug und/oder einer Gaspedal-Sollvorgabe für das Fahrzeug und/oder einer Bremspedal-Sollvorgabe für das Fahrzeug und/oder einer Kupplungs-Sollvorgabe für das Fahrzeug ermittelt werden, die den jeweiligen Steuereinrichtungen im Fahrzeug vorliegen und die über entsprechende Sensoren an der jeweiligen Betätigungsvorrichtung erfasst werden können.

Die Fahrzeug-Umfeld-Charakteristik des Fahrzeug-Umfeldes kann beispielsweise über mindestens einen Sensor ausgewählt aus der Gruppe bestehend aus einem Radar-Sensor des Fahrzeuges, einer Umfeldkamera des Fahrzeuges, einem Ultraschall-Sensor des Fahrzeuges, einem Infrarot-Sensor des Fahrzeuges und einem Laser-Sensor des Fahrzeuges ermittelt werden, über die das Fahrzeug-Umfeld erfasst werden kann. Ergänzend kann auch auf Navigations-Informationen eines Navigationsgerätes des Fahrzeuges zurückgegriffen werden.

Daraus lassen sich als Fahrsituations-Informationen, die die Charakteristik des Fahrzeug-Umfeldes angeben, beispielsweise eine Anzahl an Objekten in dem Fahrzeug-Umfeld des Fahrzeuges, z.B. andere Verkehrsteilnehmer, und/oder eine Objekt-Längsgeschwindigkeit und/oder eine Objekt-Quergeschwindigkeit und/oder eine Objekt-Längsbeschleunigung und/oder eine Objekt-Querbeschleunigung und/oder ein Objekt-Abstand zwischen dem Fahrzeug und dem jeweils erkannten Objekt und/oder eine Objekt-Abmessung, z.B. eine Breite und eine Höhe des Objektes, und/oder ein Objekttyp, z.B. ein Motorrad, ein LKW, ein PKW, ein Fahrrad, eine Person, etc., und/oder eine Relativposition zwischen dem Objekt und dem Fahrzeug, z.B. daneben, davor, dahinter, etc., und/oder eine Fahrbahnmarkierung einer Fahrbahn im Fahrzeug-Umfeld, z.B. eine durchgezogene Linie, eine gestrichelte Linie, etc., und/oder eine Fahrbahncharakteristik der Fahrbahn, z.B. eine Breite und eine Anzahl an Fahrspuren der Fahrbahn, herleiten. Aus den Navigations-Informationen kann ergänzend auch eine aktuelle absolute Fahrzeug-Position des Fahrzeuges, ein Straßentyp, z.B. geschlossene Ortschaft, Autobahn, Landstraße, etc., ein Datum, eine Uhrzeit, eine Fahrtrichtung und daraus insbesondere auch eine Tageszeit und darüber eine den Fahrer beeinflussende Helligkeitsinformation als Fahrsituations-Informationen gewonnen werden.

Somit kann eine umfassende Charakterisierung des Fahrzeug-Umfeldes aus unterschiedlichen Quellen stattfinden, aus denen sich ein Einfluss auf die Fahrsituation ergeben kann.

Der Fahrerzustand kann vorzugsweise über eine Fahrerkamera des Fahrzeuges erfasst werden, die auf den Fahrer des Fahrzeuges gerichtet ist und über die das Verhalten des Fahrers im Hinblick auf seine Aufmerksamkeit erfasst werden kann.

Der Fahrerzustand ist hierbei vorzugsweise abhängig von einem Blickwinkel des Fahrers und/oder einer Handstellung des Fahrers, z.B. am Lenkrad oder nicht, und/oder einem Gurtstatus, z.B. angeschnallt oder nicht, und/oder einer Fahrzeit und/oder einer Pausenzeit des Fahrers. Somit kann bei der Bewertung auch das Verhalten bzw. der Zustand des Fahrers des Fahrzeuges sowie dessen Fahrgewohnheiten mit einbezogen werden. Darüber lässt sich ermitteln, ob der Fahrer unaufmerksam oder abgelenkt ist oder sich konzentriert und - beispielsweise bei automatisierten Fahrsituationen - überhaupt am Platz ist und das Lenkrad berührt und somit dem Fahrgeschehen seine volle Aufmerksamkeit schenken kann.

Ein Fahrzeugzustand des Fahrzeuges kann beispielsweise in Abhängigkeit einer Aktivierung eines Blinkers des Fahrzeuges und/oder einer Warnblinkanlage des Fahrzeuges und/oder einer Fahrzeug-Beleuchtung des Fahrzeuges, z.B. Abblendlicht, Fernlicht, Lichthupe, etc., und/oder einem Nebenscheinwerfer des Fahrzeuges und/oder eines Zusatzscheinwerfers des Fahrzeuges und/oder einer Scheibenwischerstufe des Fahrzeuges und/oder einer Innenraumbeleuchtung des Fahrzeuges ermittelt werden. Demnach kann erfasst werden, in welchem Zustand sich das Fahrzeug befindet, d.h. ob beispielsweise eine Regenfahrt vorliegt, eine Fahrt bei Dunkelheit, ein Abbiegevorgang, eine Stillstandsituation, etc.

Somit stehen eine Reihe von Fahrsituations-Informationen zur Verfügung, über die eine Charakterisierung der aktuellen Fahrsituation des Fahrzeuges stattfinden kann und aus der über den Neuronal-Algorithmus eine Prognose auf das zukünftige Fahrgeschehen des Fahrzeuges getroffen werden kann. Insbesondere kann hierbei auch der Fahrerzustand des Fahrers selbst berücksichtigt werden, d.h. wie schnell dieser in der Lage ist, überhaupt in das Fahrgeschehen einzugreifen.

Die Kategorisierung bzw. Bewertung durch den Neuronal-Algorithmus kann beispielsweise in mindestens drei Fahrsituations-Kategorien stattfinden, wobei ausgehend von der aktuellen Fahrsituation für eine erste Fahrsituations-Kategorie eine unkritischen Fahrsituation prognostiziert wird, für eine zweite Fahrsituations-Kategorie eine medium-kritische Fahrsituation prognostiziert wird und für eine dritte Fahrsituations-Kategorie eine kritische Fahrsituation prognostiziert wird.

Durch diese Kategorisierung kann vorteilhafterweise eine einfache Unterteilung vorgegeben werden, in Abhängigkeit derer der Fahrer gezielt in das Fahrgeschehen eingreifen kann. Wird demnach eine unkritische Fahrsituation prognostiziert, d.h. die erste Fahrsituations-Kategorie ausgegeben, kann der Fahrer seine Fahrweise und seinen Aufmerksamkeitsgrad beibehalten, da ein Unfall unwahrscheinlich ist.

Wird jedoch eine medium-kritische Fahrsituation prognostiziert, d. h. die zweite Fahrsituations-Kategorie ausgegeben, liegt in der Zukunft zumindest eine problematische (medium-kritische) Fahrsituation vor, zu deren Verhinderung der Fahrer bereits während der aktuellen Fahrsituation in das Fahrgeschehen eingreifen kann, um beispielsweise eine Notbremsung und/oder einen abrupten Lenkeingriff zu vermeiden, die zu einem vollständigen Entschärfen der problematischen Fahrsituation, d.h. ein Verhindern einer Kollision, nötig wären. Somit kann durch ein vorbeugendes Eingreifen durch den Fahrer ein Eintreten bzw. Einleiten der prognostizierten Fahrsituation bereits verhindert werden, so dass eine Notbremsung und/oder ein abrupter Lenkeingriff für eine Kollisionsvermeidung vorteilhafterweise ausbleiben kann und somit eine verbesserte Kontrollierbarkeit des Fahrzeuges gegeben ist. D. h. die für die Zukunft vorhergesagte medium-kritische Fahrsituation wird durch den vorbeugenden Eingriff vorteilhafterweise zu einer unkritischen Fahrsituation.

Vergleichbar verhält es sich bei einer Vorhersage einer kritischen Fahrsituation, d. h. die dritte Fahrsituations-Kategorie wird ausgegeben, wobei dann durch ein vorbeugendes Eingreifen durch den Fahrer zumindest eine medium-kritische Fahrsituation und bestenfalls eine unkritische Situation erreicht werden kann. Ohne einen derartigen Eingriff würde es auf jeden Fall zu einer Kollision kommen

Um die Kategorisierung durch den Neuronal-Algorithmus zu erreichen, kann der Neuronal-Algorithmus über eine Trainings-Datenbank trainiert werden, wobei in der Trainings-Datenbank eine Vielzahl an Fahrsituations-Informationen von tatsächlich in der Vergangenheit durchgeführten Trainings-Fahrsituationen, in denen sich auch das Fahrzeug aktuell befinden kann, sowie diesen Trainings-Fahrsituationen zugeordnete prognostizierte Fahrsituationen bzw. die entsprechenden Fahrsituations-Kategorien abgelegt sind. Als Trainings-Datenbank kann hierbei beispielsweise auf eine Datenbank zurückgegriffen werden, in dem eine Vielzahl an Trainings-Fahrsituationen, in denen sich auch das Fahrzeug aktuell befinden kann, mit einer jeweils manuell zugeordneten Fahrsituations-Kategorie gespeichert sind. Dazu kann anhand der betreffenden Fahrsituations-Informationen für die Trainings-Fahrsituation analysiert werden, zu welcher prognostizierten Fahrsituation im Sinne der Erfindung die jeweilige Trainings-Fahrsituation in der Vergangenheit geführt hat, d.h. in welche Fahrsituations-Kategorie eine bestimmte Trainings-Fahrsituation einzuordnen ist.

Vorteilhafterweise kann somit für den Lernvorgang vorzugsweise auf eine Vielzahl an tatsächlichen "Versuchen", die in anderen Fahrzeugen in der Vergangenheit durchgeführt wurden (Trainings-Fahrsituationen) zurückgegriffen werden und hierbei vorzugsweise ein bereits bestehendes System verwendet werden, das eine Vielzahl an derartigen Zuordnungen bereits bereitstellt, mit denen das neuronale Netz umfangreich trainiert werden kann. Dadurch kann die Zuverlässigkeit erhöht werden, da das neuronale Netz in einer Lernphase entsprechend umfangreich modifiziert werden kann.

Vorzugsweise kann die Lernphase hierbei nach der Lernregel des überwachten Lernens ("supervised learning", "backpropagation") stattfinden, d.h. dem Neuronal-Algorithmus werden die Fahrsituations-Informationen von Trainings-Fahrsituationen als Eingabewerte und die Fahrsituations-Kategorien der diesen zugeordneten prognostizierten Fahrsituationen als bekannter Ausgabewert des Neuronal-Algorithmus vorgegeben. So wird der Neuronal-Algorithmus durch Vorgabe der "korrekten Antwort" trainiert, so dass dieser nach umfangreicher Trainingsphase auch ohne die Vorgabe der richtigen Antwort den korrekten Ausgabewert erzeugt.

Das Training bzw. der Anlernprozess des Neuronal-Algorithmus können hierbei vorzugsweise auf einer Hochleistungs-Recheneinheit außerhalb des Fahrzeuges stattfinden, um im Fahrzeug selbst keine hochleistungsfähigen Recheneinheiten zur Durchführung von aufwändigen Rechenoperationen installieren zu müssen und somit keinen zusätzlichen Bauraum im Fahrzeug zu beanspruchen. Erst das trainierte neuronale Netz wird dann im Fahrzeug in der oben beschriebenen Weise verwendet, beispielsweise in Form eines Computerprogrammproduktes.

Der Neuronal-Algorithmus kann hierbei auch aktualisiert werden, indem beispielsweise in gewissen zeitlichen Abständen oder kontinuierlich ein zusätzliches Training erfolgt, in dem neu hinzugekommene kategorisierte Trainings-Fahrsituationen hinzugenommen werden. Diese können hierbei vom eigenen Fahrzeug stammen oder aber auch von anderen Fahrzeugen. Der aktualisierte, erneut trainierte Neuronal-Algorithmus kann dann auf das Fahrzeug oder auch andere Fahrzeuge übertragen werden, so dass vorteilhafterweise auf neu hinzugekommene Fahrsituationen adäquat reagiert werden kann sowie auch die Genauigkeit und Zuverlässigkeit des trainierten neuronalen Netzes insgesamt erhöht wird.

Vorteilhafterweise kann das zusätzliche Training hierbei auf Trainings-Fahrsituationen beschränkt oder gezielt ausgerichtet werden, die vom bestehenden, d.h. noch nicht aktualisierten, Neuronal-Algorithmus in der jeweiligen Fahrsituation falsch bewertet wurden. D.h. als Trainings-Fahrsituationen werden hauptsächlich Fahrsituationen übernommen, die in der Vergangenheit zu einer kritischen oder medium-kritischen Fahrsituation geführt haben, vom Neuronal-Algorithmus mit dem zu diesem Zeitpunkt vorhandenen Trainingsstatus jedoch als in der Zukunft unkritische Fahrsituation kategorisiert wurden. Somit hat sich eine aktuelle Fahrsituation zu einer medium-kritischen oder kritischen Fahrsituation entwickelt, ohne dass sich der Fahrer darauf einstellen konnte. Im jeweiligen Fahrzeug kann diese Fehleinschätzung entsprechend mit einem zusätzlichen Fehlerhinweis abgespeichert und anschließend an die Hochleistungs-Recheneinheit als fehleingeschätzte Trainings-Fahrsituation übermittelt werden, die das zusätzliche Training des neuronalen Netzes durchführt. Das Training kann in dieser Weise auch gezielt im Hinblick auf Fehler bzw. falsche Treffer durchgeführt werden, um das neuronale Netz weiter zu modifizieren und in Zukunft auch auf diese in der Vergangenheit falsch eingestuften Fahrsituationen korrekt zu reagieren.

In Abhängigkeit des Ausgabewertes kann dann vorteilhafterweise eine Warnung oder ein Hinweis an den Fahrer erzeugt werden. Beispielsweise kann bei Vorliegen der ersten Fahrsituations-Kategorie ein grünes Warnlicht ausgegeben werden oder aber eine Warnung entfallen, so dass der Fahrer in Kenntnis gesetzt wird, dass alles in Ordnung ist. In der zweiten Fahrsituations-Kategorie kann ein rotes Warnlicht ausgegeben werden, so dass der Fahrer auf die bevorstehende medium-kritische Fahrsituation zumindest hingewiesen wird und demnach adäquat reagieren kann, um diese bereits vorausschauend zu entschärfen. In der dritten Fahrsituations-Kategorie kann aufgrund der bevorstehenden kritischen Fahrsituation alternativ oder ergänzend eine akustische und ggf. auch haptische Warnung an den Fahrer ausgegeben werden, so dass dieser den Ernst der bevorstehenden Fahrsituation erkennt und seine volle Aufmerksamkeit auf das Fahrgeschehen richtet, um einen bevorstehenden Unfall zu vermeiden, z.B. durch einen vorausschauenden Eingriff.

Vorzugsweise erfolgt die Ausgabe der Warnung rechtzeitig vor Einleiten der prognostizierten Fahrsituation, vorzugsweise einen Eingriffszeitraum vor dem Einleiten der prognostizierten Fahrsituation, so dass auf eine Kollision vorbeugend reagiert werden kann. Der Eingriffszeitraum kann demnach beispielsweise mindestens ca. 3 bis 4 Sekunden, d.h. mehr als die Faher-Reaktionszeit, vorzugsweise mindestens doppelt so hoch wie die Fahrer-Reaktionszeit, sein. Der Eingriffszeitraum kann aber je nach Verfügbarkeit und Trainingsstatus des Neuronal-Algorithmus auch weit vor dem Einleiten der prognostizierten Fahrsituation liegen.

Das erfindungsgemäße Bewertungsmodul zum Durchführen des erfindungsgemäßen Verfahrens kann beispielsweise im Fahrzeug angeordnet sein und eine Eingangs-Schnittstelle, eine Ausgangs-Schnittstelle und den auf einer Bewertungseinheit gespeicherten Neuronal-Algorithmus als Computer-Programmprodukt aufweisen, das das bereits trainierte neuronale Netz beinhaltet. Der Eingangs-Schnittstelle werden als Eingangswerte die die aktuelle Fahrsituation charakterisierenden Fahrsituations-Informationen zugeführt, die von dem Neuronal-Algorithmus in Fahrsituations-Kategorien kategorisiert werden können. Ein von der Fahrsituations-Kategorie abhängiger Ausgabewert kann aus der Ausgangs-Schnittstelle zur weiteren Verarbeitung ausgegeben werden, beispielsweise zum Erzeugen des davon abhängigen Warnsignals an den Fahrer.

Die Erfindung wird im Folgenden anhand der beiliegenden Zeichnungen an einigen Ausführungsformen näher erläutert. Es zeigen:
- Fig. 1: ein Fahrzeug in einer aktuellen Fahrsituation;
- Fig. 2: ein Bewertungsmodul zur Bewertung der aktuellen Fahrsituation des Fahrzeuges gemäß Figur 1;
- Fig. 3: Flussdiagramm des erfindungsgemäßen Verfahrens.

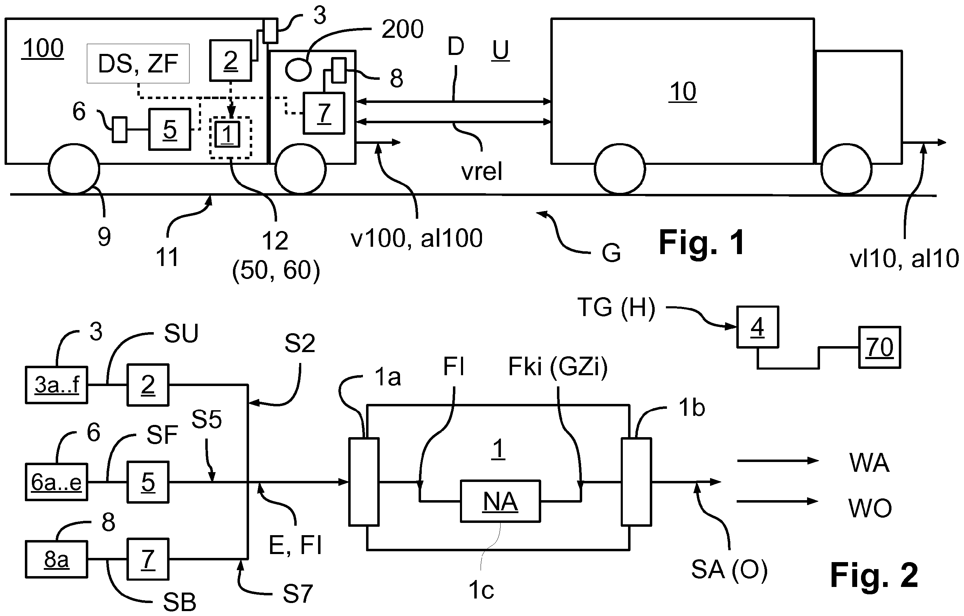

Gemäß Fig. 1 ist ein Fahrzeug 100, insbesondere Nutzfahrzeug, auf einer Fahrbahn 11 in einer beliebigen aktuellen Fahrsituation G gezeigt. Zusätzlich befindet sich in einem Objekt-Abstand D zum Fahrzeug 100 ein Objekt 10 auf der Fahrbahn 11, wobei sich das Objekt 10 mit einer gewissen Objekt-Längsgeschwindigkeit vl10 und einer Objekt-Längsbeschleunigung al10 entlang einer gewissen Trajektorie bewegt, die anhand der Fahrdynamik des Objektes 10 auch für die Zukunft prädiziert werden kann. Das Objekt 10 ist ein anderer Verkehrsteilnehmer, beispielsweise ein anderes Fahrzeug. Die aktuelle Fahrsituation G ist lediglich beispielhaft dargestellt und dabei sehr einfach gehalten. Es können sich auch weitere Objekte auf bzw. neben der Fahrbahn 11 befinden.

Das Fahrzeug 100 bewegt sich auf der Fahrbahn 11 entlang einer gewissen Trajektorie mit einer Fahrzeug-Geschwindigkeit v100 und einer Fahrzeug-Längsbeschleunigung al100. Im Fahrzeug 100 sind unterschiedliche Überwachungsmodule 2, 5, 7 und Sensoranordnungen 3, 6, 8 vorgesehen, die in Fig. 1 lediglich stark schematisiert dargestellt sind, sowie ein damit verbundenes Bewertungsmodul 1, die wie folgt miteinander zusammenwirken:
Fig. 2 zeigt das Bewertungsmodul 1, das eine Eingangs-Schnittstelle 1a und eine Ausgangs-Schnittstelle 1b aufweist. Über die Eingangs-Schnittstelle 1a können dem Bewertungsmodul 1 unterschiedliche Eingabewerte E vorgegeben werden, die im Bewertungsmodul 1 verarbeitet bzw. bewertet werden können. Das Bewertungsmodul 1 kann beispielsweise in einer Steuereinheit 12 integriert sein, die Bestandteil eines nicht dargestellten Fahrerassistenzsystems 50, z.B. ACC, ABS, EBC, etc. und/oder eines Bremssystems 60 des Fahrzeuges 100 ist.

Dazu ist die Eingangs-Schnittstelle 1a beispielsweise mit einem Umfeld-Überwachungsmodul 2 verbunden, das über eine Umfeld-Sensoranordnung 3, die beispielsweise einen Radar-Sensor 3a, eine Umfeldkamera 3b, einen Ultraschall-Sensor 3c, einen Infrarot-Sensor 3d, einen Laser-Sensor 3e etc. aufweisen kann, in der Lage ist, ein Fahrzeug-Umfeld U um das Fahrzeug 100 zu überwachen, so dass eine Fahrzeug-Umfeld-Charakteristik CU erstellt werden kann. Weiterhin kann ein Navigationsgerät 3f Teil der Umfeld-Sensoranordnung 3 sein, das Navigations-Informationen NI ausgibt. Die einzelnen Sensoren 3a...f der Umfeld-Sensoranordnung 3 sind in Fig. 2 zwar schematisch in einem Kasten dargestellt, können sich aber an unterschiedlichen Positionen im Fahrzeug 100 befinden.

Das Umfeld-Überwachungsmodul 2 nimmt Umfeld-Signale SU, die die Ausgabewerte der einzelnen Sensoren 3a...f aufweisen, von der Umfeld-Sensoranordnung 3 auf und wertet aus, ob und wie sich möglicherweise vorhandene Objekte 10 in dem Fahrzeug-Umfeld U verhalten und wie sich diese Objekte 10 dabei insbesondere relativ zum Fahrzeug 100 bewegen. Dies kann in Abhängigkeit einer erfassten Anzahl N an Objekten 10 in dem Fahrzeug-Umfeld U und/oder einer Objekt-Längsgeschwindigkeit v110 und/oder einer Objekt-Quergeschwindigkeit vq10 und/oder einer Objekt-Längsbeschleunigung al10 und/oder einer Objekt-Querbeschleunigung aq10 und/oder dem Objekt-Abstand D und/oder einer Objekt-Abmessung C10 und/oder einem Objekttyp T10 und/oder einer Relativposition P10 und/oder einer Fahrbahnmarkierung FM und/oder einer Fahrbahncharakteristik FC und/oder einer aktuellen absoluten Fahrzeug-Position P100 des Fahrzeuges 100 und/oder eines Straßentyps TS und/oder einer aktuellen Zeitinformation tI und/oder einer Fahrtrichtung FR des Fahrzeuges 100 erfolgen.

Alle diese Informationen können von der Umfeld-Sensoranordnung 3 bezogen werden und ermöglichen es, das Fahrzeug-Umfeld U für die aktuelle Fahrsituation G zu charakterisieren. Somit ist es mit dem Umfeld-Überwachungsmodul 2 möglich, in Abhängigkeit der Umfeld-Signale SU Fahrsituations-Informationen FI zu verarbeiten und auszugeben, die charakterisieren, unter welchen Bedingungen sich das Fahrzeug 100 im Fahrzeug-Umfeld U bewegt, so dass sich daraus herleiten lässt, welchen Einfluss das Fahrzeug-Umfeld U auf das Fahrzeug 100 in der aktuellen Fahrsituation G voraussichtlich hat.

Weiterhin ist das Bewertungsmodul 1 mit einem Fahrdynamik-Überwachungsmodul 5 verbunden, das ausgebildet ist, über eine Fahrdynamik-Sensoranordnung 6 eine Ist-Fahrdynamik DI des Fahrzeuges 100 zu ermitteln. Die Fahrdynamik-Sensoranordnung 6 kann dazu beispielsweise einen Geschwindigkeits-Sensor 6a zum Erfassen der Fahrzeug-Geschwindigkeit v100 des Fahrzeuges 100, einen Längsbeschleunigungs-Sensor 6b zum Erfassen einer Fahrzeug-Längsbeschleunigung al100 des Fahrzeuges 100, einen Querbeschleunigungs-Sensor 6c zum Erfassen einer Fahrzeug-Querbeschleunigung aq100 des Fahrzeuges 100, einen Gierraten-Sensor 6d zum Erfassen einer Gierrate G des Fahrzeuges 100 und mindestens einen Raddrehzahl-Sensor 6e zum Erfassen von Radgeschwindigkeiten vR mindestens eines Rades 9 des Fahrzeuges 100 aufweisen. Die einzelnen Sensoren 6a...e der Fahrdynamik-Sensoranordnung 6 sind in Fig. 2 zwar schematisch in einem Kasten dargestellt, können sich aber an unterschiedlichen Positionen im Fahrzeug 100 befinden.

Das Fahrdynamik-Überwachungsmodul 5 nimmt Fahrdynamik-Signale SF die die Ausgabewerte der einzelnen Sensoren 6a...e aufweisen, von der Fahrdynamik-Sensoranordnung 6 auf und wertet die Ist-Fahrdynamik DI des Fahrzeuges 100 aus, wobei die Ist-Fahrdynamik DI aus den Ausgabewerten der einzelnen o.g. Sensoren 6a...e folgt. Hierbei kann auch eine aus den Ausgabewerten folgende Stabilitätsinformation verarbeitet werden, beispielsweise ein Bremsschlupf oder ein Antriebsschlupf, der aus den Radgeschwindigkeiten vR folgt.

Somit ist es mit dem Fahrdynamik-Überwachungsmodul 5 möglich, in Abhängigkeit der Fahrdynamik-Signale SF Fahrsituations-Informationen FI zu verarbeiten und auszugeben, die charakterisieren, welche Ist-Fahrdynamik DI das Fahrzeug 100 in der aktuellen Fahrsituation G aufweist, d. h. wie sich das Fahrzeug 100 im Fahrzeug-Umfeld U bewegt.

Weiterhin ist das Bewertungsmodul 1 mit einem Fahrer-Überwachungsmodul 7 verbunden, das über eine Fahrer-Sensoranordnung 8, beispielsweise mit einer auf den Fahrer 200 ausgerichteten Fahrerkamera 8a, einen Fahrerzustand ZD erfasst. Als Fahrerzustand ZD werden hierbei beispielsweise Bewegungen oder Verhaltensweisen des Fahrers 200 verstanden. Das Fahrer-Überwachungsmodul 7 nimmt hierbei Fahrer-Signale SB, vorzugsweise als Bildsignale, auf und wertet den Fahrerzustand aus. Demnach kann beispielsweise ein Blickwinkel ZD1 des Fahrers 200 und/oder eine Handstellung ZD2 des Fahrers 200 und/oder ein Gurtstatus ZD3 erfasst werden. Weiterhin lassen sich aus den Fahrer-Signalen SB eine Fahrzeit ZD4 und/oder einer Pausenzeit ZD5 des Fahrers 200 erfassen, d.h. wie lange dieser schon am Platz ist und wann die letzte Pause war. Daraus kann geschlussfolgert werden, wie aufmerksam oder müde oder konzentriert der Fahrer 200 voraussichtlich ist und somit dem Fahrgeschehen folgen kann.

Somit ist es mit dem Fahrer-Überwachungsmodul 7 möglich, in Abhängigkeit der Fahrer-Signale SB Fahrsituations-Informationen FI zu verarbeiten und auszugeben, die charakterisieren, wie der Fahrerzustand ZD des Fahrers 200 in der aktuellen Fahrsituation G ist bzw. wie gut der Fahrer 200 die aktuelle Fahrsituation G voraussichtlich wahrnimmt.

Als weitere Fahrsituations-Informationen FI können eine Soll-Fahrdynamik DS des Fahrzeuges 100 und ein Fahrzeugzustand ZF ermittelt und an das Bewertungsmodul 1 übermittelt werden. Die Soll-Fahrdynamik DS des Fahrzeuges 100 folgt beispielsweise aus einer Retarder-Sollvorgabe RSoll für das Fahrzeug 100 und/oder einer Lenkwinkel-Sollvorgabe wSoll für das Fahrzeug 100 und/oder einer Gaspedal-Sollvorgabe aSoll für das Fahrzeug 100, d.h. einer Beschleunigungsvorgabe, und/oder einer Bremspedal-Sollvorgabe zSoll für das Fahrzeug 100, d.h. einer Verzögerungsvorgabe, und/oder einer Kupplungs-Sollvorgabe KSoll für das Fahrzeug 100. Diese werden vom Fahrer 200 durch eine entsprechende Betätigungsvorrichtung vorgegeben und erlauben eine Aussage über die aktuelle Fahrsituation G zu treffen, beispielsweise ob eine Beschleunigung des Fahrzeuges 100 gewünscht ist oder ein abrupter Lenkvorgang. Der Fahrzeugzustand ZF ist beispielsweise durch eine Aktivierung eines Blinkers ZF1 des Fahrzeuges 100 und/oder einer Warnblinkanlage ZF2 des Fahrzeuges 100 und/oder einer Fahrzeug-Beleuchtung ZF3 des Fahrzeuges 100 und/oder einem Nebenscheinwerfer ZF4 des Fahrzeuges 100 und/oder eines Zusatzscheinwerfers ZF5 des Fahrzeuges 100 und/oder einer Scheibenwischerstufe ZF6 des Fahrzeuges 100 und/oder einer Innenraumbeleuchtung ZF7 des Fahrzeuges 100 charakterisiert.

Das jeweilige Überwachungsmodul 2, 5, 7 gibt die von den jeweiligen Sensoranordnungen 3, 6, 8 aufgenommenen Signale SU, SF, SB an die Eingangs-Schnittstelle 1a des Bewertungsmoduls 1 aus, so dass dem Bewertungsmodul 1 unterschiedliche Eingabewerte E parallel vorgegeben werden können. Die aufgenommenen Signale SU, SF, SB können hierbei von dem jeweiligen Überwachungsmodul 3, 6, 8 vorverarbeitet sein oder auch unverarbeitet direkt ausgegeben werden. Als weitere Eingabewerte E werden dem Neuronal-Algorithmus NA über die Eingangs-Schnittstelle 1a der Fahrzeugzustand ZF sowie die Soll-Fahrdynamik DS des Fahrzeuges 100 vorgegeben, so dass als Eingabewerte E eine Vielzahl an Informationen bezüglich der aktuellen Fahrsituation G zur Verfügung gestellt werden.

Im Bewertungsmodul 1 werden die Eingabewerte E an einen auf einer Bewertungseinheit 1c ausgeführten Neuronal-Algorithmus NA übermittelt. Der Neuronal-Algorithmus NA ist hierbei ein auf der Bewertungseinheit 1c ausgeführtes Programm bzw. Computerprogrammprodukt, das nach Art eines künstlichen neuronalen Netzes wie folgt funktioniert:
Demnach nimmt der Neuronal-Algorithmus NA zunächst in einer Input-Ebene (Input-Layer) über ein oder mehrere Neuronen die Eingabewerte E auf, verarbeitet diese z.B. in ein oder mehreren Verarbeitungs-Ebenen (z.B. Hidden Layers) und gibt Ausgabewerte O durch Neuronen einer Output-Ebene (Output-Layer) wieder aus. In der Verarbeitungs-Ebene findet hierbei durch ein gewichtetes Zusammenwirken mehrerer Neuronen - wie in einem trainierten neuronalen Netz üblich - eine Kategorisierung der der Input-Ebene vorgegebenen Eingabewerte E in eine vorab definierte Anzahl an Kategorien statt. Die den Eingabewerten E dadurch zugeordnete Kategorie wird als Ausgabewert O aus dem Neuronal-Algorithmus NA wieder ausgegeben.

Als Eingabewerte E dienen in diesem Fall die übertragenen Fahrsituations-Informationen FI, die durch den Neuronal-Algorithmus NA in Fahrsituations-Kategorien FKi mit einem laufenden Index "i" kategorisiert werden. Alle o.g. Fahrsituations-Informationen FI sind hierbei dahingehend miteinander verknüpft, als dass sie ein Gesamtbild der aktuellen Fahrsituation G liefern können, wenn die vorhandenen Fahrsituations-Informationen FI für einen bestimmten Zeitpunkt miteinander kombiniert werden. D.h. mit den Fahrsituations-Informationen FI kann die aktuelle Fahrsituation G aus unterschiedlichen Blickwinkeln charakterisiert werden. Alle Fahrsituations-Informationen FI können dabei einen Einfluss auf das aktuelle Fahrgeschehen des Fahrzeuges 100 haben und somit auch eine zukünftiges Fahrgeschehen mit beeinflussen.

Der Neuronal-Algorithmus NA ist derartig trainiert, dass dieser vorausschauend insbesondere anhand der aktuell vorliegenden Fahrsituations-Informationen FI bzw. des aktuellen Gesamtbildes der aktuellen Fahrsituation G, die als Eingabewerte E vorgegeben werden, bewertet bzw. prognostiziert, welche Fahrsituation voraussichtlich in Zukunft folgen wird. Diese für die Zukunft vorausgesagte Fahrsituation wird im Folgenden als prognostizierte Fahrsituation GZi bezeichnet. Die Fahrsituations-Informationen FI bzw. die aktuelle Fahrsituation G wird hierbei durch den Neuronal-Algorithmus NA kategorisiert, wobei die Anzahl an Kategorien, die Fahrsituations-Kategorien Fki, abhängig von der möglichen Anzahl an prognostizierten Fahrsituationen GZi, d.h. dem Index "i" ist. Die Fahrsituations-Kategorien Fki sind also mit den prognostizierten Fahrsituationen GZi verknüpft:
Es können beispielsweise drei unterschiedliche Fahrsituations-Kategorien Fki vorgesehen sein, d. h. i =1, 2, 3. Eine erste Fahrsituations-Kategorie Fk1 gibt an, dass für die Zukunft eine unkritische Fahrsituation GZ1 prognostiziert wird, eine zweite Fahrsituations-Kategorie Fk2 gibt an, dass für die Zukunft eine medium-kritische Fahrsituation GZ2 prognostiziert wird, und eine dritte Fahrsituations-Kategorie Fk3 gibt an, dass für die Zukunft eine kritische Fahrsituation GZ3 prognostiziert wird.

Wird nach einer Bewertung der aktuellen Fahrsituation G von dem Neuronal-Algorithmus NA als Ausgabewert O eine erste Fahrsituations-Kategorie Fk1 ausgegeben, so wird für die Zukunft eine unkritische Fahrsituation GZ1 vorausgesagt und ein Unfall in Zukunft ist - auch ohne die volle Aufmerksamkeit des Fahrers 200 und ohne ein Eingreifen bzw. eine Reaktion durch den Fahrer 200 - eher unwahrscheinlich.

Wird nach einer Bewertung der aktuellen Fahrsituation G von dem Neuronal-Algorithmus NA als Ausgabewert O eine zweite Fahrsituations-Kategorie Fk2 ausgegeben, so wird für die Zukunft eine medium-kritische Fahrsituation GZ2 vorausgesagt, d. h. es kann sich aus der aktuellen Fahrsituation G im weiteren Fahrverlauf unter den aktuell vorliegenden Bedingungen eine zumindest problematische - medium-kritische - Fahrsituation GZ2 entwickeln, wenn der Fahrer 200 dem aktuellen Fahrgeschehen nicht die volle Aufmerksamkeit schenkt und nicht auch vorbeugend in das Fahrgeschehen eingreift. Darunter ist z.B. eine Fahrsituation zu verstehen, in der ein Unfall nur noch mit einer Notbremsung und/oder mit einem Lenkeingriff zu vermeiden ist, wenn nicht bereits ein vorbeugendes Eingreifen in das Fahrgeschehen während der aktuellen Fahrsituation G durch den Fahrer 200 stattfindet.

Wird nach einer Bewertung der aktuellen Fahrsituation G von dem Neuronal-Algorithmus NA als Ausgabewert O eine dritte Fahrsituations-Kategorie Fk3 ausgegeben, so wird für die Zukunft eine kritische Fahrsituation GZ3 vorausgesagt, bei der ein Unfall sehr wahrscheinlich ist, insbesondere auf jeden Fall stattfinden wird, wenn der Fahrer 200 dem aktuellen Fahrgeschehen nicht die volle Aufmerksamkeit schenkt und nicht auch vorbeugend in das Fahrgeschehen eingreift. Insofern ist bei dieser Kategorisierung ein vorbeugender Eingriff in das aktuelle Fahrgeschehen auf jeden Fall erforderlich, um ausgehend von der aktuellen Fahrsituation G in der Zukunft einen Unfall mit entsprechenden Unfallfolgen zu vermeiden.

Diese Bewertungen bzw. Kategorisierungen können hierbei durch den Neuronal-Algorithmus NA bereits dann stattfinden, wenn aufgrund der Fahrdynamik des Fahrzeuges 100 und dem Verhalten bzw. der Situation des Fahrzeug-Umfeldes U in der aktuellen Fahrsituation G noch keine medium-kritische oder kritische Fahrsituation vorliegt bzw. eingeleitet wurde, sondern erst noch bevorsteht bzw. sich in Zukunft erst beginnt zu entwickeln. Somit unterscheidet sich die aktuelle Fahrsituation G zum Zeitpunkt der Bewertung noch von der prognostizierten Fahrsituation GZi, insbesondere von der medium-kritischen oder kritischen Fahrsituation GZ2, GZ3, in der Zukunft. Insofern wird bereits vorbeugend bewertet und demnach kann auch vorbeugend gewarnt bzw. reagiert werden.

So kann durch ein Voraussagen einer in Zukunft folgenden medium-kritischen Fahrsituation GZ2 in der zweiten Fahrsituations-Kategorie Fk2 eine Unfallvermeidung kontrollierter stattfinden, da eine Reaktion darauf ebenfalls bereits vorbeugend, z.B. bereits während der noch andauernden aktuellen Fahrsituation G, stattfinden kann und dadurch ein Unfall ggf. auch bereits ohne das Durchführen einer Notbremsung und/oder einem Lenkeingriff vermieden werden kann. Durch die vorausschauende Bewertung einer zukünftig folgenden kritischen Fahrsituation GZ3 in der dritten Fahrsituations-Kategorie Fk3 kann in dieser Kategorie ein Unfall ebenfalls verhindert werden, indem der Fahrer 200 bereits früher, z.B. bereits während der noch andauernden aktuellen Fahrsituation G, eingreift, auch wenn dafür ggf. eine Notbremsung und/oder ein Lenkeingriff erforderlich sind. Aus einer prognostizierten medium-kritischen oder kritischen Fahrsituation kann demnach durch ein vorbeugendes Eingreifen im besten Fall eine unkritische Fahrsituation folgen.

Insofern unterscheidet sich die erfindungsgemäße Bewertung von herkömmlichen Unfallvermeidungs- bzw. Unfallwarnsystemen, bei denen erst dann gewarnt bzw. reagiert wird und - aufgrund des Konzeptes derartiger Systeme - werden kann, wenn beispielsweise aktuell vorliegende Grenzwerte für einen Objekt-Abstand D oder eine Relativgeschwindigkeit vrel unterschritten wurden und demnach eine medium-kritische oder kritische Fahrsituation bzw. eine Unfallsituation bereits begonnen hat zu entwickeln. Daher unterscheidet sich die aktuelle Fahrsituation G, in der bewertet wird, in herkömmlichen Systemen nicht von der medium-kritischen oder kritischen Fahrsituation GZ2, GZ3, auf die reagiert werden soll, so dass in derartigen Systemen quasi erst bei Vorliegen der "prognostizierten Fahrsituation" GZi im Sinne der hier vorliegenden Erfindung bewertet und gleichzeitig entsprechend reagiert werden kann.

Um diese Kategorisierung in diese drei Fahrsituations-Kategorien Fk1, Fk2, Fk3 vornehmen zu können, ist das neuronale Netz bzw. der Neuronal-Algorithmus NA vorab in einer sogenannten Lernphase ("deep learning") zu trainieren, wobei dies in einer Hochleistungs-Recheneinheit 70 außerhalb des Fahrzeuges 100 stattfindet, um Bauraum im Fahrzeug 100 zu sparen und rechenaufwändige Operationen auszulagern, die nicht unbedingt im Fahrzeug 100 selbst durchzuführen sind. Das Training bzw. der Lernprozess erfolgt nach bekannten Mustern bzw. Lernregeln, beispielsweise durch überwachtes Lernen ("supervised learning", "backpropagation"). Demnach können dem zu trainierenden neuronalen Netz bzw. Neuronal-Algorithmus NA in der Hochleistungs-Recheneinheit 70 Fahrsituations-Informationen FI als Trainings-Fahrsituationen TG zugeführt werden, von denen die Fahrsituations-Kategorie Fki bzw. die prognostizierten Fahrsituationen GZi bereits bekannt sind. Dadurch werden in der Lernphase Gewichtungen zwischen den betreffenden Neuronen unterschiedlicher Ebenen des neuronalen Netzes und ein Aktivitätslevel der Neuronen eingestellt bzw. modifiziert.

Werden in einer anschließenden Testphase, z.B. auch im Fahrzeug 100, die Fahrsituations-Informationen FI, von denen der Ausgabewert O bzw. die Fahrsituations-Kategorie Fki bekannt ist, erneut als Eingabewerte E eingegeben, folgt - bei erfolgreicher Lernphase - der korrekte Ausgabewert O, d.h. die zutreffende Fahrsituations-Kategorie Fki und demnach die prognostizierte Fahrsituation GZi. Auf diese Weise lernt der Neuronal-Algorithmus NA bzw. das neuronale Netz, wie es Fahrsituations-Informationen FI als Eingabewerte E in korrekter Weise kategorisiert. Dadurch können in Zukunft auch bisher unbekannte Fahrsituations-Informationen FI einer noch unbekannten aktuellen Fahrsituation G durch eine erfindungsgemäße Bewertung, die dann im Fahrzeug 100 über das dann auf dem Bewertungsmodul 1 installierten trainierten Neuronal-Algorithmus NA durchgeführt wird, mit hoher Genauigkeit einer Fahrsituations-Kategorie Fki zugeordnet werden können.

Mit dem künstlichen neuronalen Netz bzw. dem Neuronal-Algorithmus NA kann somit bei ausreichend hoher Anzahl an bekannten Fahrsituation-Informationen FI bzw. Trainings-Fahrsituationen TG mit bekannten Ausgabewert O, das heißt mit bekannter Fahrsituations-Kategorie Fki bzw. bekannten prognostizierten Fahrsituationen GZi, ein neuronales Netz erstellt bzw. aufgebaut werden, mit dem jeder aktuell vorliegenden (neuen) Fahrsituation G durch eine Bewertung dieser eine Fahrsituations-Kategorie Fki zugeordnet werden kann, beispielsweise auch für die aktuelle in Fig. 1 dargestellte Fahrsituation G, bei der die entsprechende Fahrsituations-Informationen FI erfasst werden. Umso mehr Fahrsituations-Informationen FI dabei zur Verfügung stehen, auf die das künstliche neuronale Netz auch trainiert wurde, desto zuverlässiger kann diese Kategorisierung erfolgen.

Zum Bereitstellen einer ausreichend hohen Anzahl an Fahrsituations-Informationen FI mit bekannten Ausgabewerten O zum Trainieren des Neuronal-Algorithmus NA auf der Hochleistungs-Recheneinheit 70 kann beispielsweise auf eine Trainings-Datenbank 4 zurückgegriffen werden, die derartige Zuordnungen bereits enthält. Als Trainings-Datenbank 4 eignet sich beispielsweise das bereits eingesetzte und aufgebaute SmartDrive-System ( http://www.smartdrive.net/ ). In der Trainings-Datenbank 4 sind die o. g. Fahrsituations-Informationen FI betreffend die Fahrzeug-Umfeld-Charakteristik CU, die Ist-Fahrdynamik DI, die Soll-Fahrdynamik DS, den Fahrerzustand ZD und den Fahrzeugzustand ZF für unterschiedliche Trainings- Fahrsituationen TG, die bereits in der Vergangenheit in einem beliebigen anderen Fahrzeug vorgelegen haben, gesammelt und in die Fahrsituations-Kategorien Fki kategorisiert. Diese Kategorisierung erfolgt beispielsweise manuell, indem die Trainings-Fahrsituationen TG, denen bestimmte Fahrsituations-Informationen FI zugeordnet sind und die auch aktuell für das Fahrzeug 100 vorliegen können, dahingehend analysiert werden, ob diese zu einem darauffolgenden Zeitpunkt, der mindestens einen Eingriffszeitraum tB später folgt, zu einer unkritischen, einer medium-kritischen oder einer kritischen Fahrsituation GZ1, GZ2, GZ3 gemäß o.g. Kategorisierung geführt haben. Diese Kategorisierung kann beispielsweise über Kamerasignale vom Fahrzeug-Umfeld U ermittelt werden, die der jeweiligen Trainings-Datenbank 4 ebenfalls zur Verfügung stehen.

Demnach kann zugrunde gelegt werden, welche Fahrsituations-Informationen FI bzw. Trainings-Fahrsituationen TG zu einem bestimmten Eingriffszeitraum tB vor dem Einleiten einer unkritischen, medium-kritischen oder kritischen Fahrsituation GZ1, GZ2, GZ3 tatsächlich vorlagen. Dieser Eingriffszeitraum tB kann variabel gewählt werden, insbesondere derartig, dass der Fahrer 200 genügend Zeit hat, nach einer vorausschauenden Bewertung der aktuellen Fahrsituation G, die auf Grundlage dieses Eingriffszeitraumes tB durch den Neuronal-Algorithmus NA kategorisiert wurde, entsprechend zu reagieren, um eine bestimmte prognostizierte Fahrsituation GZi noch zu vermeiden. Vorzugsweise kann dazu mindestens die Fahrer-Reaktionszeit tR, vorzugweise mindestens die doppelte Fahrer-Reaktionszeit tR angesetzt werden, d. h. mindestens 3 bis 4 Sekunden.

Der Eingriffszeitraum tB ist allerdings auch durch die verwendeten Sensoren insbesondere der Umfeld-Sensoranordnung 3 begrenzt, da das Fahrzeug-Umfeld U und auch Bewegungen anderer Objekte 10 lediglich begrenzt erfasst werden können. Der Eingriffszeitraum tB kann auch nachträglich noch verändert werden, z.B. um das Ansprechverhalten des Bewertungsmoduls 1 einzustellen und an das Fahrzeug 100 anzupassen. Diese Fahrsituations-Informationen FI zu den gegebenen Eingriffszeitpunkten tB für die jeweiligen Trainings-Fahrsituationen TG werden dann mit der betreffenden Kategorisierung dazu verwendet, das künstliche neuronale Netz bzw. den Neuronal-Algorithmus NA nach Art des überwachten Lernens ("supervised learning", "backpropagation") zu trainieren.

Da das SmartDrive-System bereits im Einsatz ist, wurden bereits eine große Anzahl an Zuordnungen bzw. Kategorisierungen von Trainings-Fahrsituationen TG vorgenommen, so dass die Gewichtungen und Aktivitätslevel der Neuronen des neuronalen Netzes unter Verwendung dieser Trainings-Datenbank 4 in einer Lernphase entsprechend eingestellt bzw. modifiziert werden können, um eine zuverlässigen Ausgabewert O für jede beliebige aktuelle Fahrsituation G zu erzeugen.

Zudem kann dem Fahrzeug 100 aber auch in bestimmten Zeitabständen ein aktualisierter Neuronal-Algorithmus NA zur Verfügung gestellt werden. Dazu kann auf der Hochleistungs-Recheneinheit 70 in gewissen zeitlichen Abständen oder kontinuierlich ein zusätzliches Training erfolgen, in dem dem neuronalen Netz in einer erneuten Lernphase kategorisierte Trainings-Fahrsituationen TG, die in der Trainings-Datenbank 4 neu hinzugekommen sind, zugeführt werden. Diese können hierbei vom eigenen Fahrzeug 100 stammen oder aber auch von anderen Fahrzeugen. Der aktualisierte, erneut trainierte Neuronal-Algorithmus NA kann dann auf das Fahrzeug 100 oder auch auf andere Fahrzeuge übertragen werden, so dass vorteilhafterweise auf möglicherweise neu hinzukommende Fahrsituationen G adäquat reagiert werden kann sowie auch die Genauigkeit und Zuverlässigkeit des trainierten neuronalen Netzes insgesamt erhöht wird.

Vorteilhafterweise kann das zusätzliche Training hierbei auf Trainings-Fahrsituationen TG beschränkt oder gezielt ausgerichtet werden, die von einem bestehenden Neuronal-Algorithmus NA in der jeweiligen Fahrsituation G falsch bewertet wurden. D.h. als Trainings-Fahrsituationen TG werden hauptsächlich Fahrsituationen G übernommen, die in der Vergangenheit zu einer kritischen oder medium-kritischen Fahrsituation GZ2, GZ3 geführt haben, vom Neuronal-Algorithmus NA mit dem zu diesem Zeitpunkt vorhandenen "Wissen" bzw. Trainingsstatus jedoch als in der Zukunft unkritische Fahrsituation GZ1 kategorisiert wurden. Somit hat sich eine aktuelle Fahrsituation G zu einer medium-kritischen oder kritischen Fahrsituation GZ2, GZ3 entwickelt, ohne dass sich der Fahrer 200 darauf einstellen konnte.

Im jeweiligen Fahrzeug 100 kann eine derartige Fehleinschätzung entsprechend mit einem zusätzlichen Fehlerhinweis H abgespeichert und anschließend als fehleingeschätzte Trainings-Fahrsituation TG (H) an die Hochleistungs-Recheneinheit 70 übermittelt werden, die das zusätzliche Training des neuronalen Netzes durchführt. Das Training kann in dieser Weise auch gezielt im Hinblick auf Fehler bzw. falsche Treffer durchgeführt werden, um das neuronale Netz weiter zu modifizieren und in Zukunft auch auf diese in der Vergangenheit falsch eingestuften Fahrsituationen G korrekt zu reagieren.

Nachdem dem Bewertungsmodul 1 vorgegebene Fahrsituations-Informationen FI des Fahrzeuges 100 von dem trainierten Neuronal-Algorithmus NA kategorisiert und ein entsprechender Ausgabewert O ausgegeben wurde und somit eine Fahrsituations-Kategorie Fki der aktuellen Fahrsituation G zugeordnet wurde, kann in Abhängigkeit der Fahrsituations-Kategorie Fki eine bestimmte Aktion folgen:
Bei Vorliegen der ersten Fahrsituations-Kategorie Fki1, das heißt bei einer zukünftig unkritischen Fahrsituation GZ1, wird z.B. keine weitere Aktion ausgeführt oder es leuchtet eine grüne Kontrolllampe auf, die angibt, dass alles in Ordnung ist.

Liegt hingegen in Zukunft eine medium-kritische Fahrsituation GZ2 vor, die in der zweiten Fahrsituations-Kategorie Fk2 eingestuft wird, kann ein optisches Warnsignal WO an den Fahrer 200 ausgegeben werden, beispielsweise in Form einer roten Warnlampe. Dadurch soll der Fahrer 200 darauf hingewiesen werden, dass aufgrund der derzeitigen Fahrsituation G ein Unfall in Zukunft wahrscheinlich ist, der zudem lediglich durch eine Notbremsung bzw. eine Vollbremsung und/oder einen Lenkeingriff verhindert werden kann, wenn der Fahrer 200 nicht sofort in das Fahrgeschehen eingreift bzw. diesem die volle Aufmerksamkeit schenkt. Um also eine manuelle oder von einer Notbremseinrichtung veranlasste Vollbremsung und/oder Lenkeingriff zu vermeiden, wird der Fahrer 200 darauf hingewiesen, dass er möglichst in der aktuellen Fahrsituation G selbst tätig werden soll, um den Eingriff kontrollierter zu gestalten.

Liegt eine kritische Fahrsituation GZ3 für die Zukunft vor, die in der dritten Fahrsituations-Kategorie Fk3 eingeordnet wird, wird ergänzend oder alternativ ein akustisches Warnsignal WA ausgegeben, dass den Fahrer 200 veranlassen soll, auf jeden Fall in die aktuelle Fahrsituation G einzugreifen bzw. dieser die volle Aufmerksamkeit zu schenken, da ein Unfall vorausgesagt wird, der ohne einen sofortigen Eingriff durch den Fahrer 200 mit hoher Wahrscheinlichkeit zu einem Unfall mit schwerwiegenden Unfallfolgen führen wird.

Die jeweilige Aktion kann entweder vom Bewertungsmodul 1 veranlasst werden oder aber von einer anderen Steuereinheit, wobei die entsprechende Fahrsituations-Kategorie Fki bzw. der Ausgabewert O in einem Ausgangs-Signal SA über die Ausgangs-Schnittstelle 1b ausgegeben wird.

Die Warnung WO, WA erfolgt einen Eingriffszeitraum tB, der auch in dem Lernvorgang angesetzt wird, vor dem Einleiten der prognostizierten Fahrsituation GZi, so dass dem Fahrer 200 noch genügend Zeit zum Reagieren gegeben wird.

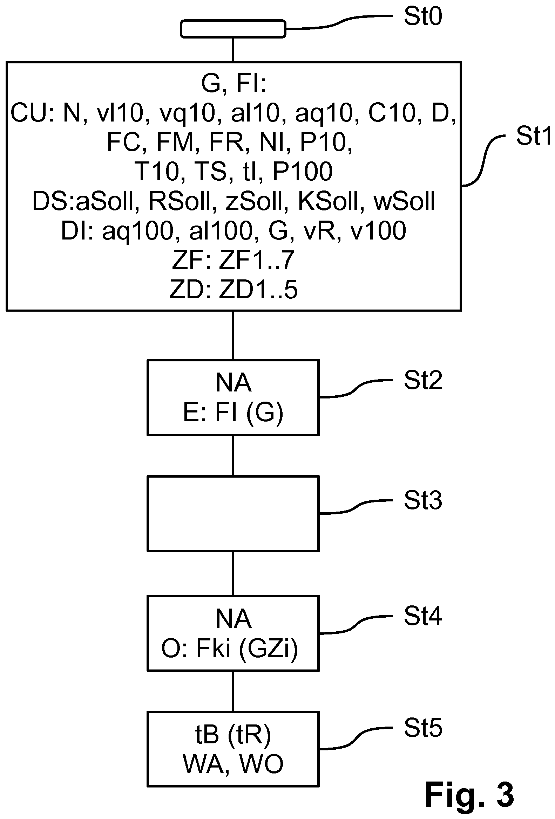

Das erfindungsgemäße Verfahren kann gemäß Fig. 3 beispielsweise wie folgt durchgeführt werden:
In einem anfänglichen Schritt St0 nach Initialisierung im Fahrbetrieb kann in einem ersten Schritt St1 ein Einlesen der Fahrsituations-Informationen FI für die aktuelle Fahrsituation G über die Eingangs-Schnittstelle 1a stattfinden, wobei die Fahrsituations-Informationen FI wie beschrieben ermittelt werden, um ein Gesamtbild der aktuellen Fahrsituation G aus unterschiedlichen Blickwinkeln, d.h. aus der Ist-Fahrdynamik DI des Fahrzeuges 100, der Soll-Fahrdynamik DS des Fahrzeuges 100, einem Fahrerzustand ZD, einem Fahrzeugzustand ZF und einer Fahrzeug-Umfeld-Charakteristik CU, zu erhalten. In einem zweiten Schritt St2 werden die Fahrsituations-Informationen FI als Eingabewerte E dem Neuronal-Algorithmus NA zugeführt. Dieser "verarbeitet" diese in einem dritten Schritt St3 nach der beschriebenen Systematik nach Art eines trainierten künstlichen neuronalen Netzes und gibt in einem vierten Schritt St4 einen Ausgabewert O aus, der den Fahrsituations-Informationen FI eine Fahrsituations-Kategorie Fki zuordnet und demnach angibt, welche prognostizierte Fahrsituation GZi sich aus der aktuellen Fahrsituation G voraussichtlich entwickeln wird. In Abhängigkeit dieser Fahrsituations-Kategorie Fki kann dann in einem fünften Schritt St5 eine Warnung WA, WO an den Fahrer 200 erfolgen, so dass dieser bereits vorbeugend reagieren kann und seine Aufmerksamkeit voll auf das Fahrgeschehen richten kann, falls nötig.

### Bezugszeichenliste (Teil der Beschreibung)

- 1: Bewertungsmodul
- 1a: Eingangs-Schnittstelle
- 1b: Ausgangs-Schnittstelle
- 1c: Bewertungseinheit
- 2: Umfeld-Überwachungsmodul
- 3: Umfeld-Sensoranordnung
- 3a: Radar-Sensor
- 3b: Umfeldkamera
- 3c: Ultraschall-Sensor
- 3d: Infrarot-Sensor
- 3e: Laser-Sensor
- 3f: Navigationsgerät
- 4: Trainings-Datenbank
- 5: Fahrdynamik-Überwachungsmodul
- 6: Fahrdynamik-Sensoranordnung
- 6a: Geschwindigkeits-Sensor
- 6b: Längsbeschleunigungs-Sensor
- 6c: Querbeschleunigungs-Sensor
- 6d: Gierraten-Sensor
- 6e: Raddrehzahl-Sensoren
- 7: Fahrer-Überwachungsmodul
- 8: Fahrer-Sensoranordnung
- 8a: Fahrerkamera
- 9: Rad
- 10: Objekt
- 11: Fahrbahn
- 12: Steuereinheit
- 50: Fahrerassistenzsystem
- 60: Bremssystem
- 70: Hochleistungs-Recheneinheit
- 100: Fahrzeug
- 200: Fahrer
- al10: Objekt-Längsbeschleunigung
- aq10: Objekt-Querbeschleunigung
- al100: Fahrzeug-Längsbeschleunigung
- aq100: Fahrzeug-Querbeschleunigung
- aSoll: Gaspedal-Sollvorgabe
- C10: Objekt-Abmessung
- CU: Fahrzeug-Umfeld-Charakteristik
- D: Objekt-Abstand
- DI: Ist-Fahrdynamik
- DS: Soll-Fahrdynamik
- E: Eingabewerte
- FC: Fahrbahncharakteristik
- FI: Fahrsituations-Informationen
- Fki: Fahrsituations-Kategorie
- Fk1: erste Fahrsituations-Kategorie
- Fk2: zweite Fahrsituations-Kategorie
- Fk3: dritte Fahrsituations-Kategorie
- FM: Fahrbahnmarkierung
- FR: Fahrtrichtung
- G: aktuelle Fahrsituation
- GZi: prognostizierte Fahrsituation
- GZ1: unkritische Fahrsituation
- GZ2: medium-kritische Fahrsituation
- GZ3: kritische Fahrsituation
- H: Fehlerhinweis
- i: Index
- KSoll: Kupplungs-Sollvorgabe
- N: Anzahl
- NA: Neuronal-Algorithmus
- NI: Navigations-Information
- O: Ausgabewerte
- P10: Relativposition
- P100: absolute Fahrzeug-Position
- RSoll: Retarder-Sollvorgabe
- SA: Ausgangs-Signal
- SB: Fahrer-Signal
- SF: Fahrdynamik-Signal
- SU: Umfeld-Signal
- T10: Objekttyp
- tB: Eingriffszeitraum
- TG: Trainings-Fahrsituation
- tI: Zeitinformation
- tR: Fahrer-Reaktionszeit
- TS: Straßentyp
- U: Fahrzeug-Umfeld
- vl10: Objekt-Längsgeschwindigkeit
- vq10: Objekt-Quergeschwindigkeit
- v100: Fahrzeug-Geschwindigkeit
- vrel: Relativgeschwindigkeit
- vR: Radgeschwindigkeiten
- wSoll: Lenkwinkel-Sollvorgabe
- WA: akustisches Warnsignal
- WO: optisches Warnsignal
- ZD: Fahrerzustand
- ZD1: Blickwinkel
- ZD2: Handstellung
- ZD3: Gurtstatus
- ZD4: Fahrzeit
- ZD5: Pausenzeit
- ZF: Fahrzeugzustand
- ZF1: Blinker
- ZF2: Warnblinkanlage
- ZF3: Fahrzeug-Beleuchtung
- ZF4: Nebelscheinwerfer
- ZF5: Zusatzscheinwerfer
- ZF6: Scheibenwischerstufe
- ZF7: Innenraumbeleuchtung
- zSoll: Bremspedal-Sollvorgabe

- St1, St2, St3, St4, St5: Schritte des Verfahrens

## Patentansprüche

1. Verfahren zum vorausschauenden Bewerten einer aktuellen Fahrsituation (G) eines Fahrzeuges (100), insbesondere Nutzfahrzeuges (100), mit mindestens den folgenden Schritten:
- anhand von Sensordaten des Fahrzeuges (100) Ermitteln von aktuell vorliegenden Fahrsituations-Informationen (FI), wobei die Fahrsituations-Informationen (FI) die aktuelle Fahrsituation (G) des Fahrzeuges (100) charakterisieren (St1),
- Vorgeben der Fahrsituations-Informationen (FI) an einen Neuronal-Algorithmus (NA), der von einem Bewertungsmodul (1) in einer Steuereinheit (12) des Fahrzeuges (100) ausgeführt wird, wobei der Neuronal-Algorithmus (NA) nach Art eines trainierten neuronalen Netzes den aktuell vorliegenden Fahrsituations-Informationen (FI) eine Fahrsituations-Kategorie (Fki) zuordnet, wobei die jeweilige Fahrsituations-Kategorie (Fki) auf einer prognostizierten Fahrsituation (GZi) basiert, und der Neuronal-Algorithmus (NA) über eine Trainings-Datenbank (4) trainiert wird, wobei in der Trainings-Datenbank (4) Fahrsituations-Informationen (FI) von Trainings-Fahrsituationen (TG) sowie den Trainings-Fahrsituationen (TG) zugeordnete prognostizierte Fahrsituationen (GZi) und/oder zugeordnete Fahrsituations-Kategorien (Fki) abgelegt sind, wobei dem Neuronal-Algorithmus (NA) die Fahrsituations-Informationen (FI) der Trainings- Fahrsituationen (TG) als Eingabewerte (E) und die Fahrsituations-Kategorien (Fki) der diesen zugeordneten prognostizierten Fahrsituationen (GZi) als bekannte Ausgabewerte (O) des Neuronal-Algorithmus (NA) vorgegeben werden zum Trainieren des Neuronal-Algorithmus (NA) nach der Lernregel des überwachten Lernens, wobei der trainierte Neuronal-Algorithmus (NA) in Abhängigkeit der aktuellen Fahrsituation (G) die prognostizierte Fahrsituation (GZi) ermittelt und die prognostizierte Fahrsituation (GZi) eine sich in Zukunft aus der aktuellen Fahrsituation (G) entwickelnde Fahrsituation des Fahrzeuges (100) angibt (St2, St3); und
- Ausgeben eines die prognostizierte Fahrsituation (GZi) und/oder die zugeordnete Fahrsituations-Kategorie (Fki) charakterisierenden Ausgabewertes (O) als Bewertungsergebnis (St4), an den Fahrer des Fahrzeuges in Form eines akustischen oder optischen Warnsignals (WA, WO), **dadurch gekennzeichnet, dass** die Warnung (WO, WA) einen Eingriffszeitraum (tB) vor dem Einleiten der prognostizierten Fahrsituation (GZi) ausgegeben wird, wobei der Eingriffszeitraum (tB) größer als eine Fahrer-Reaktionszeit (tR) ist, mindestens dem Doppelten der Fahrer-Reaktionszeit (tR) entspricht, insbesondere mindestens 3 bis 4 Sekunden beträgt.

2. Verfahren nach Anspruch 1, **dadurch gekennzeichnet, dass** die die aktuelle Fahrsituation (G) charakterisierenden Fahrsituations-Informationen (FI) abhängig von einer Ist-Fahrdynamik (DI) des Fahrzeuges (100) und/oder einer Soll-Fahrdynamik (DS) des Fahrzeuges (100) und/oder einer Fahrzeug-Umfeld-Charakteristik (CU) eines Fahrzeug-Umfeldes (U) und/oder einem Fahrerzustand (ZD) eines Fahrers (200) des Fahrzeuges (100) und/oder eines Fahrzeugzustandes (ZF) des Fahrzeuges (100) sind.

3. Verfahren nach Anspruch 2, **dadurch gekennzeichnet, dass** die Ist-Fahrdynamik (DI) des Fahrzeuges (100) abhängig von einer Fahrzeug-Geschwindigkeit (v100) des Fahrzeuges (100) und/oder einer Fahrzeug-Längsbeschleunigung (al100) des Fahrzeuges (100) und/oder einer Fahrzeug-Querbeschleunigung (aq100) des Fahrzeuges (100) und/oder einer Gierrate (G) des Fahrzeuges (100) und/oder von einer Radgeschwindigkeit (vR) mindestens eines Rades (9) des Fahrzeuges (100) ist.

4. Verfahren nach Anspruch 3, **dadurch gekennzeichnet, dass** die Ist-Fahrdynamik (DI) des Fahrzeuges (100) mit mindestens einem Sensor ausgewählt aus der Gruppe bestehend aus einem Geschwindigkeits-Sensor (6a) zum Erfassen der Fahrzeug-Geschwindigkeit (v100) des Fahrzeuges (100), einem Längsbeschleunigungs-Sensor (6b) zum Erfassen der Fahrzeug-Längsbeschleunigung (al100) des Fahrzeuges (100), einem Querbeschleunigungs-Sensor (6c) zum Erfassen der Fahrzeug-Querbeschleunigung (aq100) des Fahrzeuges (100), einem Gierraten-Sensor (6d) zum Erfassen der Gierrate (G) des Fahrzeuges (100) und mindestens einem Raddrehzahl-Sensor (6e) zum Erfassen einer Radgeschwindigkeit (vR) mindestens eines Rades (9) des Fahrzeuges (100) ermittelt wird.

5. Verfahren nach einem der Ansprüche Anspruch 2 bis 4, **dadurch gekennzeichnet, dass** die Soll-Fahrdynamik (DS) des Fahrzeuges (100) in Abhängigkeit einer Retarder-Sollvorgabe (RSoll) für das Fahrzeug (100) und/oder einer Lenkwinkel-Sollvorgabe (wSoll) für das Fahrzeug (100) und/oder einer Gaspedal-Sollvorgabe (aSoll) für das Fahrzeug (100) und/oder einer Bremspedal-Sollvorgabe (zSoll) für das Fahrzeug (100) und/oder einer Kupplungs-Sollvorgabe (KSoll) für das Fahrzeug (100) ermittelt wird.

6. Verfahren nach einem der Ansprüche 2 bis 5, **dadurch gekennzeichnet, dass** die Fahrzeug-Umfeld-Charakteristik (CU) des Fahrzeug-Umfeldes (U) in Abhängigkeit einer Anzahl (N) an Objekten (10) in dem Fahrzeug-Umfeld (U) und/oder einer Objekt-Längsgeschwindigkeit (v110) und/oder einer Objekt-Quergeschwindigkeit (vq10) und/oder einer Objekt-Längsbeschleunigung (al10) und/oder einer Objekt-Querbeschleunigung (aq10) und/oder einem Objekt-Abstand (D) zwischen dem Fahrzeug (100) und dem Objekt (10) und/oder einer Objekt-Abmessung (C10) und/oder einem Objekttyp (T10) und/oder einer Relativposition (P10) des Objektes (10) relativ zum Fahrzeug (100) und/oder einer Fahrbahnmarkierung (FM) auf einer Fahrbahn (11) im Fahrzeug-Umfeld (U) und/oder einer Fahrbahncharakteristik (FC) der Fahrbahn (11) und/oder einer aktuellen absoluten Fahrzeug-Position (P100) des Fahrzeuges (100) und/oder eines Straßentyps (TS) und/oder einer Zeitinformation (tI) und/oder einer Fahrtrichtung (FR) des Fahrzeuges (100) ermittelt wird.

7. Verfahren nach Anspruch 6, **dadurch gekennzeichnet, dass** die Fahrzeug-Umfeld-Charakteristik (CU) des Fahrzeug-Umfeldes (U) mit mindestens einem Sensor ausgewählt aus der Gruppe bestehend aus einem Radar-Sensor (3a) des Fahrzeuges (100), einer Umfeldkamera (3b) des Fahrzeuges (100), einem Ultraschall-Sensor (3c) des Fahrzeuges (100), einem Infrarot-Sensor (3d) des Fahrzeuges (100) und einem Laser-Sensor (3e) des Fahrzeuges (100) ermittelt wird und/oder aus von einem Navigationsgerät (3f) des Fahrzeuges (100) bereitgestellten Navigations-Informationen (NI).

8. Verfahren nach einem der Ansprüche 2 bis 7, **dadurch gekennzeichnet, dass** der Fahrerzustand (ZD) des Fahrers (200) abhängig von einem Blickwinkel (ZD1) des Fahrers (200) des Fahrzeuges (100) und/oder einer Handstellung (ZD2) des Fahrers (200) des Fahrzeuges (100) und/oder einem Gurtstatus (ZD3) des Fahrzeuges (100) und/oder einer Fahrzeit (ZD4) und/oder einer Pausenzeit (ZD5) jeweils des Fahrers (200) des Fahrzeuges (100) ist.

9. Verfahren nach Anspruch 8, **dadurch gekennzeichnet, dass** der Fahrerzustand (ZD) des Fahrers (200) des Fahrzeuges (100) durch eine auf den Fahrer (200) des Fahrzeuges (100) gerichtete Fahrerkamera (8) ermittelt wird.

10. Verfahren nach einem der Ansprüche 2 bis 9, **dadurch gekennzeichnet, dass** der Fahrzeugzustand (ZF) des Fahrzeuges (100) in Abhängigkeit einer Aktivierung eines Blinkers (ZF1) des Fahrzeuges (100) und/oder einer Warnblinkanlage (ZF2) des Fahrzeuges (100) und/oder einer Fahrzeug-Beleuchtung (ZF3) des Fahrzeuges (100), und/oder einem Nebenscheinwerfer (ZF4) des Fahrzeuges (100) und/oder eines Zusatzscheinwerfers (ZF5) des Fahrzeuges (100) und/oder einer Scheibenwischerstufe (ZF6) des Fahrzeuges (100) und/oder einer Innenraumbeleuchtung (ZF7) des Fahrzeuges (100) ermittelt wird.

11. Verfahren nach einem der vorhergehenden Ansprüche, **dadurch gekennzeichnet, dass** sich die aktuelle Fahrsituation (G) von der prognostizierten Fahrsituation (GZi) unterscheidet und die Bewertung während der aktuellen Fahrsituation (G) stattfindet.

12. Verfahren nach einem der vorhergehenden Ansprüche, **dadurch gekennzeichnet, dass** durch den Neuronal-Algorithmus (NA) eine Kategorisierung in mindestens drei Fahrsituations-Kategorien (Fki, i=1, 2, 3) stattfindet, wobei ausgehend von der aktuellen Fahrsituation (G) für die erste Fahrsituations-Kategorie (Fk1) eine unkritischen Fahrsituation (GZ1) prognostiziert wird, für die zweite Fahrsituations-Kategorie (Fk2) eine medium-kritische Fahrsituation (GZ2) prognostiziert wird und für die dritte Fahrsituations-Kategorie (Fk3) eine kritische Fahrsituation (GZ3) prognostiziert wird.

13. Verfahren nach einem der vorhergehenden Ansprüche, **dadurch gekennzeichnet, dass** eine Aktualisierung des Neuronal-Algorithmus (N) stattfindet, wobei der Neuronal-Algorithmus (NA) dazu zusätzlich mit neu hinzukommenden Trainings-Fahrsituationen (TG) trainiert wird.

14. Verfahren nach Anspruch 13, **dadurch gekennzeichnet, dass** als neu hinzukommende Trainings-Fahrsituationen (TG) Fahrsituationen (G) vorgegeben werden, für die ein Fehlerhinweis (H) gespeichert wurde, wobei der Fehlerhinweis (H) auf eine Fehleinschätzung des noch nicht aktualisierten Neuronal-Algorithmus (NA) für die betreffende Fahrsituation (G) hindeutet.

15. Verfahren nach einem der vorhergehenden Ansprüche, **dadurch gekennzeichnet, dass** der Neuronal-Algorithmus (NA) auf einer Hochleistungs-Recheneinheit (70) trainiert und aktualisiert wird, wobei die Hochleistungs-Recheneinheit (70) außerhalb des Fahrzeuges (100) angeordnet ist, und der darauf trainierte Neuronal-Algorithmus (NA) dem Fahrzeug (100) zur Bewertung zur Verfügung gestellt wird.

16. Verfahren nach einem der vorhergehenden Ansprüche, **dadurch gekennzeichnet, dass** in Abhängigkeit der von dem Neuronal-Algorithmus (NA) ausgegebenen Fahrsituations-Kategorie (Fki) eine Warnung (WO, WA) an den Fahrer ausgegeben wird.

17. Bewertungsmodul (1) für ein Fahrzeug (100), insbesondere Nutzfahrzeug (100), zum Durchführen eines Verfahrens nach einem der vorhergehenden Ansprüche, mit einer Eingangs-Schnittstelle (1a), einer Ausgangs-Schnittstelle (1b) und einer Bewertungseinheit (1c), auf der ein Neuronal-Algorithmus (NA) gespeichert ist, wobei der Eingangs-Schnittstelle (1a) als Eingabewerte (E) die aktuelle Fahrsituation (G) charakterisierende Fahrsituations-Informationen (FI) zuführbar sind, die von dem Neuronal-Algorithmus (NA) in Fahrsituations-Kategorien (Fki) kategorisierbar sind, und ein die Fahrsituations-Kategorie (Fki) charakterisierender Ausgabewert (O) aus der Ausgangs-Schnittstelle (1b) zur weiteren Verarbeitung ausgebbar ist, wobei der Neuronal-Algorithmus (NA) über eine Trainings-Datenbank (4) trainiert ist, wobei in der Trainings-Datenbank (4) Fahrsituations-Informationen (FI) von Trainings-Fahrsituationen (TG) sowie den Trainings-Fahrsituationen (TG) zugeordnete prognostizierte Fahrsituationen (GZi) und/oder zugeordnete Fahrsituations-Kategorien (Fki) abgelegt sind, wobei dem Neuronal-Algorithmus (NA) die Fahrsituations-Informationen (FI) der Trainings-Fahrsituationen (TG) als Eingabewerte (E) und die Fahrsituations-Kategorien (Fki) der diesen zugeordneten prognostizierten Fahrsituationen (GZi) als bekannte Ausgabewerte (O) des Neuronal-Algorithmus (NA) vorgegeben sind zum Trainieren des Neuronal-Algorithmus (NA) nach der Lernregel des überwachten Lernens, **dadurch gekennzeichnet, dass** die Bewertungseinheit so ausgelegt ist, dass die Warnung (WO, WA) einen Eingriffszeitraum (tB) vor dem Einleiten der prognostizierten Fahrsituation (GZi) ausgegeben wird, wobei der Eingriffszeitraum (tB) größer als eine Fahrer-Reaktionszeit (tR) ist, mindestens dem Doppelten der Fahrer-Reaktionszeit (tR) entspricht, und insbesondere mindestens 3 bis 4 Sekunden beträgt.

18. Fahrzeug (100), insbesondere Nutzfahrzeug (100), mit einem Bewertungsmodul (1) nach Anspruch 17 zur Durchführung eines Verfahrens nach einem der Ansprüche 1 bis 16.

19. Fahrzeug (100) nach Anspruch 18, **dadurch gekennzeichnet, dass** das Bewertungsmodul (1) in einer Steuereinheit (12) des Fahrzeuges (100) integriert ist, beispielsweise in einer Steuereinheit (12) eines Fahrerassistenzsystems (50) und/oder eines Bremssystems (60) des Fahrzeuges (100).

20. Computer-Programmprodukt mit Programmcode zur Durchführung des Verfahrens nach einem der Ansprüche 1 bis 16, wenn das Programm auf einer Bewertungseinheit (1c) eines Bewertungsmoduls (1) gemäß Anspruch 17 ausgeführt wird.

## Claims

1. Method for predictive assessment of a current driving situation (G) of a vehicle (100), in particular a commercial vehicle (100), comprising at least the following steps:
- determining current driving situation information (FI) using sensor data of the vehicle (100), the driving situation information (FI) characterizing (St1) the current driving situation (G) of the vehicle (100),
- providing the driving situation information (FI) to a neural algorithm (NA) which is executed by means of an assessment module (1) in a control unit (12) of the vehicle (100), the neural algorithm (NA) assigning a driving situation category (Fki) to the current driving situation information (FI) in the manner of a trained neural network, the relevant driving situation category (Fki) being based on a predicted driving situation (GZi), and the neural algorithm (NA) being trained via a training database (4), driving situation information (FI) of training driving situations (TG), and predicted driving situations (GZi) and/or driving situation categories (Fki) assigned to the training driving situations (TG) being stored in the training database (4), the neural algorithm (NA) being provided with the driving situation information (FI) of the training driving situations (TG) as input values (E) and the driving situation categories (Fki) of the predicted driving situations (GZi) assigned thereto as known output values (O) of the neural algorithm (NA), for training the neural algorithm (NA) according to the learning rule of supervised learning, the trained neural algorithm (NA) determining the predicted driving situation (GZi) depending on the current driving situation (G), and the predicted driving situation (GZi) indicating (St2, St3) a driving situation of the vehicle (100) which will develop in the future from the current driving situation (G); and
- outputting an output value (O) characterizing the predicted driving situation (GZi) and/or the assigned driving situation category (Fki) as an assessment result (St4) to the driver of the vehicle in the form of an acoustic or optical warning signal (WA, WO), **characterized in that** the warning (WO, WA) is output one intervention interval (tB) before the initiation of the predicted driving situation (GZi), the intervention interval (tB) being greater than a driver reaction time (tR), corresponding to at least twice the driver reaction time (tR), and in particular being at least 3 to 4 seconds.

2. Method according to claim 1, **characterized in that** the driving situation information (FI) characterizing the current driving situation (G) is dependent on actual vehicle dynamics (DI) of the vehicle (100) and/or target vehicle dynamics (DS) of the vehicle (100) and/or a vehicle surroundings characteristic (CU) of the vehicle surroundings (U) and/or a driver state (ZD) of a driver (200) of the vehicle (100) and/or a vehicle state (ZF) of the vehicle (100).

3. Method according to claim 2, **characterized in that** the actual vehicle dynamics (DI) of the vehicle (100) are dependent on a vehicle speed (v100) of the vehicle (100) and/or a vehicle longitudinal acceleration (al100) of the vehicle (100) and/or a vehicle lateral acceleration (aq100) of the vehicle (100) and/or a yaw rate (G) of the vehicle (100) and/or on a wheel speed (vR) of at least one wheel (9) of the vehicle (100).

4. Method according to claim 3, **characterized in that** the actual vehicle dynamics (DI) of the vehicle (100) are determined by means of at least one sensor selected from the group consisting of a speed sensor (6a) for detecting the vehicle speed (v100) of the vehicle (100), a longitudinal acceleration sensor (6b) for detecting the vehicle longitudinal acceleration (al100) of the vehicle (100), a lateral acceleration sensor (6c) for detecting the vehicle lateral acceleration (aq100) of the vehicle (100), a yaw rate sensor (6d) for detecting the yaw rate (G) of the vehicle (100) and at least one wheel speed sensor (6e) for detecting a wheel speed (vR) of at least one wheel (9) of the vehicle (100).

5. Method according to any of claims 2 to 4, **characterized in that** the target vehicle dynamics (DS) of the vehicle (100) are determined as a function of a retarder target specification (RSoll) for the vehicle (100) and/or a steering angle target specification (wSoll) for the vehicle (100) and/or an accelerator pedal target specification (aSoll) for the vehicle (100) and/or a brake pedal target specification (zSoll) for the vehicle (100) and/or a clutch target specification (KSoll) for the vehicle (100).

6. Method according to any of claims 2 to 5, **characterized in that** the vehicle surroundings characteristic (CU) of the vehicle surroundings (U) is determined depending on a number (N) of objects (10) in the vehicle surroundings (U) and/or an object longitudinal velocity (vl10) and/or an object lateral velocity (vq10) and/or an object longitudinal acceleration (al10) and/or an object lateral acceleration (aq10) and/or an object distance (D) between the vehicle (100) and the object (10) and/or an object dimension (C10) and/or an object type (T10) and/or a relative position (P10) of the object (10) relative to the vehicle (100) and/or a lane marking (FM) on a lane (11) in the vehicle surroundings (U) and/or a lane characteristic (FC) of the lane (11) and/or a current absolute vehicle position (P100) of the vehicle (100) and/or a road type (TS) and/or time information (tl) and/or a direction of travel (FR) of the vehicle (100).

7. Method according to claim 6, **characterized in that** the vehicle surroundings characteristic (CU) of the vehicle surroundings (U) is determined using at least one sensor selected from the group consisting of a radar sensor (3a) of the vehicle (100), a surroundings camera (3b) of the vehicle (100), an ultrasonic sensor (3c) of the vehicle (100), an infrared sensor (3d) of the vehicle (100) and a laser sensor (3e) of the vehicle (100) and/or from navigation information (NI) provided by a navigation device (3f) of the vehicle (100).

8. Method according to any of claims 2 to 7, **characterized in that** the driver state (ZD) of the driver (200) is dependent on a viewing angle (ZD1) of the driver (200) of the vehicle (100) and/or a hand position (ZD2) of the driver (200) of the vehicle (100) and/or a seat belt state (ZD3) of the vehicle (100) and/or a driving time (ZD4) and/or a pause time (ZD5) of the driver (200) of the vehicle (100) in each case.

9. Method according to claim 8, **characterized in that** the driver state (ZD) of the driver (200) of the vehicle (100) is determined by means of a driver camera (8) directed toward the driver (200) of the vehicle (100).

10. Method according to any of claims 2 to 9, **characterized in that** the vehicle state (ZF) of the vehicle (100) is determined depending on an activation of a turn signal (ZF1) of the vehicle (100) and/or a hazard lights system (ZF2) of the vehicle (100) and/or vehicle lighting (ZF3) of the vehicle (100), and/or a side lamp (ZF4) of the vehicle (100) and/or an auxiliary headlamp (ZF5) of the vehicle (100) and/or a windshield wiper stage (ZF6) of the vehicle (100) and/or interior lighting (ZF7) of the vehicle (100).

11. Method according to any of the preceding claims, **characterized in that** the current driving situation (G) differs from the predicted driving situation (GZi) and the assessment takes place during the current driving situation (G).

12. Method according to any of the preceding claims, **characterized in that** the neural algorithm (NA) performs a categorization into at least three driving situation categories (Fki, i=1, 2, 3), a non-critical driving situation (GZ1) being predicted for the first driving situation category (Fk1), a medium-critical driving situation (GZ2) being predicted for the second driving situation category (Fk2) and a critical driving situation (GZ3) being predicted for the third driving situation category (Fk3), on the basis of the current driving situation (G).

13. Method according to any of the preceding claims, **characterized in that** the neural algorithm (N) is updated, the neural algorithm (NA) being additionally trained with newly added training driving situations (TG).

14. Method according to claim 13, **characterized in that** driving situations (G) for which an error message (H) has been stored are provided as newly added training driving situations (TG), the error message (H) indicating a misjudgment of the not yet updated neural algorithm (NA) for the relevant driving situation (G).

15. Method according to any of the preceding claims, **characterized in that** the neural algorithm (NA) is trained and updated on a high-performance computing unit (70), the high-performance computing unit (70) being arranged outside the vehicle (100), and the neural algorithm (NA) trained thereon being made available to the vehicle (100) for assessment.

16. Method according to any of the preceding claims, **characterized in that** a warning (WO, WA) is output to the driver depending on the driving situation category (Fki) output by the neural algorithm (NA).

17. Assessment module (1) for a vehicle (100), in particular a commercial vehicle (100), for carrying out a method according to any of the preceding claims, comprising an input interface (1a), an output interface (1b) and an assessment unit (1c) on which a neural algorithm (NA) is stored, it being possible for driving situation information (FI) which characterizes the current driving situation (G) to be supplied to the input interface (1a) as input values (E), which information can be categorized by means of the neural algorithm (NA) into driving situation categories (Fki), and it being possible for an output value (O) which characterizes the driving situation category (Fki) to be output from the output interface (1b) for further processing, the neural algorithm (NA) being trained via a training database (4), driving situation information (FI) of training driving situations (TG), and predicted driving situations (GZi) and/or driving situation categories (Fki) assigned to the training driving situations (TG) being stored in the training database (4), the neural algorithm (NA) being provided with the driving situation information (FI) of the training driving situations (TG) as input values (E) and the driving situation categories (Fki) of the predicted driving situations (GZi) assigned thereto as known output values (O) of the neural algorithm (NA), for training the neural algorithm (NA) according to the learning rule of supervised learning, **characterized in that** the assessment unit is designed such that the warning (WO, WA) is output one intervention interval (tB) before the initiation of the predicted driving situation (GZi), the intervention interval (tB) being greater than a driver reaction time (tR), corresponding to at least twice the driver reaction time (tR), and in particular being at least 3 to 4 seconds.

18. Vehicle (100), in particular a commercial vehicle (100), comprising an assessment module (1) according to claim 17 for carrying out a method according to any of claims 1 to 16.

19. Vehicle (100) according to claim 18, **characterized in that** the assessment module (1) is integrated in a control unit (12) of the vehicle (100), for example in a control unit (12) of a driver assistance system (50) and/or a brake system (60) of the vehicle (100).

20. Computer program product comprising program code for carrying out the method according to any of claims 1 to 16, when the program is executed on an assessment unit (1c) of an assessment module (1) according to claim 17.

## Revendications

1. Procédé permettant l'évaluation anticipée d'une situation de conduite actuelle (G) d'un véhicule (100), en particulier d'un véhicule utilitaire (100), comportant au moins les étapes suivantes :
- à l'aide de données de capteur du véhicule (100), détermination d'informations de situation de conduite (FI) actuellement présentes, dans lequel les informations de situation de conduite (FI) caractérisent (St1) la situation de conduite actuelle (G) du véhicule (100),
- prédéfinition des informations de situation de conduite (FI) sur un algorithme neuronal (NA) qui est exécuté par un module d'évaluation (1) dans une unité de commande (12) du véhicule (100), dans lequel l'algorithme neuronal (NA) associe une catégorie de situation de conduite (Fki) aux informations de situation de conduite (FI) actuellement présentes à la manière d'un réseau neuronal entraîné, dans lequel la catégorie de situation de conduite (Fki) respective est basée sur une situation de conduite prévue (GZi), et l'algorithme neuronal (NA) est entraîné par l'intermédiaire d'une base de données d'entraînement (4), dans lequel des informations de situation de conduite (FI) de situations de conduite d'entraînement (TG) ainsi que des situations de conduite prévues (GZi) associées aux situations de conduite d'entraînement (TG) et/ou des catégories de situations de conduite (Fki) associées sont stockées dans la base de données d'entraînement (4), dans lequel, sur l'algorithme neuronal (NA), les informations de situation de conduite (FI) des situations de conduite d'entraînement (TG) sont prédéfinies comme valeurs d'entrée (E) et les catégories de situation de conduite (Fki) des situations de conduite prévues (GZi) associées à celles-ci sont prédéfinies comme valeurs de sortie (O) connues de l'algorithme neuronal (NA), pour l'entraînement de l'algorithme neuronal (NA) selon la règle d'apprentissage de l'apprentissage supervisé, dans lequel l'algorithme neuronal (NA) entraîné détermine la situation de conduite prévue (GZi) en fonction de la situation de conduite actuelle (G) et la situation de conduite prévue (GZi) indique (St2, St3) une situation de conduite du véhicule (100) qui se développera à l'avenir à partir de la situation de conduite actuelle (G) ; et
- transmission d'une valeur de sortie (O), laquelle caractérise la situation de conduite prévue (GZi) et/ou la catégorie de situation de conduite (Fki) associée, comme résultat d'évaluation (St4) au conducteur du véhicule sous la forme d'un signal d'avertissement (WA, WO) acoustique ou optique, **caractérisé en ce que** l'avertissement (WO, WA) est transmis pendant une période d'intervention (tB) avant le déclenchement de la situation de conduite prévue (GZi), dans lequel la période d'intervention (tB) est supérieure à un temps de réaction du conducteur (tR), correspond au moins au double du temps de réaction du conducteur (tR), en particulier est d'au moins 3 à 4 secondes.

2. Procédé selon la revendication 1, **caractérisé en ce que** les informations de situation de conduite (FI) caractérisant la situation de conduite actuelle (G) dépendent d'une dynamique de conduite réelle (DI) du véhicule (100) et/ou d'une dynamique de conduite de consigne (DS) du véhicule (100) et/ou d'une caractéristique d'environnement de véhicule (CU) d'un environnement du véhicule (U) et/ou d'un état de conducteur (ZD) d'un conducteur (200) du véhicule (100) et/ou d'un état de véhicule (ZF) du véhicule (100).

3. Procédé selon la revendication 2, **caractérisé en ce que** la dynamique de conduite réelle (DI) du véhicule (100) dépend d'une vitesse de véhicule (v100) du véhicule (100) et/ou d'une accélération longitudinale de véhicule (al100) du véhicule (100) et/ou d'une accélération transversale de véhicule (aq100) du véhicule (100) et/ou d'un taux de lacet (G) du véhicule (100) et/ou d'une vitesse de roue (vR) d'au moins une roue (9) du véhicule (100).

4. Procédé selon la revendication 3, **caractérisé en ce que** la dynamique de conduite réelle (DI) du véhicule (100) est déterminée à l'aide d'au moins un capteur choisi dans le groupe constitué d'un capteur de vitesse (6a) permettant de détecter la vitesse de véhicule (v100) du véhicule (100), d'un capteur d'accélération longitudinale (6b) permettant de détecter l'accélération longitudinale de véhicule (al100) du véhicule (100), d'un capteur d'accélération transversale (6c) permettant de détecter l'accélération transversale de véhicule (aq100) du véhicule (100), d'un capteur de taux de lacet (6d) permettant de détecter le taux de lacet (G) du véhicule (100) et d'au moins un capteur de vitesse de rotation de roue (6e) permettant de détecter une vitesse de roue (vR) d'au moins une roue (9) du véhicule (100).

5. Procédé selon l'une des revendications 2 à 4, **caractérisé en ce que** la dynamique de conduite de consigne (DS) du véhicule (100) est déterminée en fonction d'une exigence de consigne de ralentisseur (RSoll) pour le véhicule (100) et/ou d'une exigence de consigne d'angle de braquage (wSoll) pour le véhicule (100) et/ou d'une exigence de consigne de pédale d'accélérateur (aSoll) pour le véhicule (100) et/ou d'une exigence de consigne de pédale de frein (zSoll) pour le véhicule (100) et/ou d'une exigence de consigne d'embrayage (KSoll) pour le véhicule (100).

6. Procédé selon l'une des revendications 2 à 5, **caractérisé en ce que** la caractéristique d'environnement de véhicule (CU) de l'environnement du véhicule (U) est déterminée en fonction d'un nombre (N) d'objets (10) dans l'environnement du véhicule (U) et/ou d'une vitesse longitudinale d'objet (vl10) et/ou d'une vitesse transversale d'objet (vq10) et/ou d'une accélération longitudinale d'objet (al10) et/ou d'une accélération transversale d'objet (aq10) et/ou d'une distance par rapport à l'objet (D) entre le véhicule (100) et l'objet (10) et/ou d'une dimension d'objet (C10) et/ou d'un type d'objet (T10) et/ou d'une position relative (P10) de l'objet (10) par rapport au véhicule (100) et/ou d'un marquage de chaussée (FM) sur une chaussée (11) dans l'environnement du véhicule (U) et/ou d'une caractéristique de chaussée (FC) de la chaussée (11) et/ou d'une position de véhicule absolue actuelle (P100) du véhicule (100) et/ou d'un type de route (TS) et/ou d'une information temporelle (tl) et/ou d'un sens de déplacement (FR) du véhicule (100).

7. Procédé selon la revendication 6, **caractérisé en ce que** la caractéristique d'environnement de véhicule (CU) de l'environnement du véhicule (U) est déterminée au moyen d'au moins un capteur choisi dans le groupe constitué d'un capteur radar (3a) du véhicule (100), d'une caméra d'environnement (3b) du véhicule (100), d'un capteur à ultrasons (3c) du véhicule (100), d'un capteur infrarouge (3d) du véhicule (100) et d'un capteur laser (3e) du véhicule (100) et/ou à partir d'informations de navigation (NI) fournies par un appareil de navigation (3f) du véhicule (100).

8. Procédé selon l'une des revendications 2 à 7, **caractérisé en ce que** l'état de conducteur (ZD) du conducteur (200) dépend d'un angle de vision (ZD1) du conducteur (200) du véhicule (100) et/ou d'une position de la main (ZD2) du conducteur (200) du véhicule (100) et/ou d'un état de la ceinture (ZD3) du véhicule (100) et/ou d'un temps de conduite (ZD4) et/ou d'un temps de pause (ZD5), respectivement, du conducteur (200) du véhicule (100).

9. Procédé selon la revendication 8, **caractérisé en ce que** l'état de conducteur (ZD) du conducteur (200) du véhicule (100) est déterminé par une caméra pour conducteur (8) orientée vers le conducteur (200) du véhicule (100).

10. Procédé selon l'une des revendications 2 à 9, **caractérisé en ce que** l'état de véhicule (ZF) du véhicule (100) est déterminé en fonction d'une activation d'un clignotant (ZF1) du véhicule (100) et/ou des feux de détresse (ZF2) du véhicule (100) et/ou d'un éclairage de véhicule (ZF3) du véhicule (100), et/ou d'un phare de complément (ZF4) du véhicule (100) et/ou d'un phare supplémentaire (ZF5) du véhicule (100) et/ou d'un niveau d'essuie-glaces (ZF6) du véhicule (100) et/ou d'un éclairage d'habitacle (ZF7) du véhicule (100).

11. Procédé selon l'une des revendications précédentes, **caractérisé en ce que** la situation de conduite actuelle (G) diffère de la situation de conduite prévue (GZi) et l'évaluation a lieu pendant la situation de conduite actuelle (G).

12. Procédé selon l'une des revendications précédentes, **caractérisé en ce que**, au moyen de l'algorithme neuronal (NA), une catégorisation en au moins trois catégories de situations de conduite (Fki, i = 1, 2, 3) a lieu, dans lequel, à partir de la situation de conduite actuelle (G), une situation de conduite non critique (GZ1) est prévue pour la première catégorie de situation de conduite (Fk1), une situation de conduite moyennement critique (GZ2) est prévue pour la deuxième catégorie de situation de conduite (Fk2) et une situation de conduite critique (GZ3) est prévue pour la troisième catégorie de situation de conduite (Fk3).

13. Procédé selon l'une des revendications précédentes, **caractérisé en ce qu'**une mise à jour de l'algorithme neuronal (N) a lieu, dans lequel l'algorithme neuronal (NA) est en outre entraîné avec des situations de conduite d'entraînement (TG) nouvellement ajoutées.

14. Procédé selon la revendication 13, **caractérisé en ce que** des situations de conduite (G) pour lesquelles une indication d'erreur (H) a été mémorisée sont prédéfinies en tant que situations de conduite d'entraînement (TG) nouvellement ajoutées, dans lequel l'indication d'erreur (H) indique une erreur d'estimation de l'algorithme neuronal (NA) pas encore mis à jour pour la situation de conduite (G) concernée.

15. Procédé selon l'une des revendications précédentes, **caractérisé en ce que** l'algorithme neuronal (NA) est entraîné et mis à jour sur une unité de calcul haute performance (70), dans lequel l'unité de calcul haute performance (70) est disposée à l'extérieur du véhicule (100), et l'algorithme neuronal (NA) entraîné sur celle-ci est mis à la disposition du véhicule (100) pour l'évaluation.

16. Procédé selon l'une des revendications précédentes, **caractérisé en ce que**, en fonction de la catégorie de situation de conduite (Fki) transmise par l'algorithme neuronal (NA), un avertissement (WO, WA) est transmis au conducteur.

17. Module d'évaluation (1) pour un véhicule (100), en particulier un véhicule utilitaire (100), permettant la mise en oeuvre d'un procédé selon l'une des revendications précédentes, comportant une interface d'entrée (1a), une interface de sortie (1b) et une unité d'évaluation (1c) sur laquelle est mémorisé un algorithme neuronal (NA), dans lequel des informations de situation de conduite (FI) caractérisant la situation de conduite actuelle (G) peuvent être amenées à l'interface d'entrée (1a) en tant que valeurs d'entrée (E), lesquelles informations peuvent être catégorisées par l'algorithme neuronal (NA) dans des catégories de situations de conduite (Fki), et une valeur de sortie (O) caractérisant la catégorie de situation de conduite (Fki) peut être transmise depuis l'interface de sortie (1b) pour un traitement ultérieur, dans lequel l'algorithme neuronal (NA) est entraîné par l'intermédiaire d'une base de données d'entraînement (4), dans lequel des informations de situation de conduite (FI) de situations de conduite d'entraînement (TG) ainsi que des situations de conduite prévues (GZi) associées aux situations de conduite d'entraînement (TG) et/ou des catégories de situations de conduite (Fki) associées sont stockées dans la base de données d'entraînement (4), dans lequel, sur l'algorithme neuronal (NA), les informations de situation de conduite (FI) des situations de conduite d'entraînement (TG) sont prédéfinies en tant que valeurs d'entrée (E) et les catégories de situations de conduite (Fki) des situations de conduite prévues (GZi) associées à celles-ci sont prédéfinies en tant que valeurs de sortie (O) connues de l'algorithme neuronal (NA), pour l'entraînement de l'algorithme neuronal (NA) selon la règle d'apprentissage de l'apprentissage supervisé, **caractérisé en ce que** l'unité d'évaluation est configurée de sorte que l'avertissement (WO, WA) est transmis pendant une période d'intervention (tB) avant le déclenchement de la situation de conduite prévue (GZi), dans lequel la période d'intervention (tB) est supérieure à un temps de réaction du conducteur (tR), correspond au moins au double du temps de réaction du conducteur (tR), et est en particulier d'au moins 3 à 4 secondes.

18. Véhicule (100), en particulier véhicule utilitaire (100), comportant un module d'évaluation (1) selon la revendication 17 pour la mise en oeuvre d'un procédé selon l'une des revendications 1 à 16.

19. Véhicule (100) selon la revendication 18, **caractérisé en ce que** le module d'évaluation (1) est intégré dans une unité de commande (12) du véhicule (100), par exemple dans une unité de commande (12) d'un système d'assistance au conducteur (50) et/ou d'un système de freinage (60) du véhicule (100).

20. Produit programme informatique comportant un code de programme pour la mise en oeuvre du procédé selon l'une des revendications 1 à 16, lorsque le programme est exécuté sur une unité d'évaluation (1c) d'un module d'évaluation (1) selon la revendication 17.
